(19) Europäisches Patentamt / European Patent Office / Office européen des brevets

(11) **EP 4 234 631 A1**

(12) **EUROPEAN PATENT APPLICATION**
published in accordance with Art. 153(4) EPC

(43) Date of publication:
**30.08.2023 Bulletin 2023/35**

(21) Application number: **21882903.4**

(22) Date of filing: **21.10.2021**

(51) International Patent Classification (IPC):
*C08L 51/04* (2006.01)    *C08L 67/00* (2006.01)
*C08L 67/02* (2006.01)    *C08L 69/00* (2006.01)
*C08L 63/00* (2006.01)    *B29C 65/16* (2006.01)

(52) Cooperative Patent Classification (CPC):
**B29C 65/16; C08L 51/04; C08L 63/00; C08L 67/00; C08L 67/02; C08L 69/00**

(86) International application number:
**PCT/JP2021/038931**

(87) International publication number:
**WO 2022/085763 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2020 JP 2020177334**

(71) Applicant: **Mitsubishi Engineering-Plastics Corporation**
**Tokyo 105-0021 (JP)**

(72) Inventor: **HIWATASHI, Yuki**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(54) **RESIN COMPOSITION, MOLDED ARTICLE, USE OF RESIN COMPOSITION, KIT, LASER WELDED ARTICLE, AND METHOD FOR MANUFACTURING LASER WELDED ARTICLE**

(57)    Provided is a resin composition for use as a laser-transmitting resin member in laser welding and capable of being laser-marked, and a molded article including the resin composition, the use of the resin composition, a kit, a laser-welded article, and a method for producing a laser-welded article. The resin composition includes 100 parts by mass of a thermoplastic polyester resin, 5 to 100 parts by mass of butadiene rubber-containing polystyrene, and 0.01 to 5 parts by mass of an infrared-transmitting colorant, the resin composition being for use as a laser-transmitting resin member in laser welding and capable of being laser-marked.

[Figure 1]

(A)

[Figure 1]

(A)

(B)

**Description**

[Technical Field]

The present invention relates to a resin composition for use as a laser-transmitting resin member in laser welding and capable of being laser-marked, and a molded article including the resin composition, the use of the resin composition, a kit, a laser-welded article, and a method for producing a laser-welded article.

[Background Art]

Thermoplastic polyester resins including polybutylene terephthalate resins are excellent in mechanical strength, chemical resistance, electrical insulating properties, and the like and also have excellent heat resistance, moldability, and recyclability, and they are therefore widely used for various equipment components.

Recently, the number of cases where welding processing is performed for productivity efficiency has increased, and especially laser welding, which has little influence on electronic components, has been frequently used (for example, Patent Literature 1).

Laser welding is a technique in which a laser-transmitting resin member including a laser light-transmissive material (hereinafter sometimes referred to as a "transmitting resin member"), and a laser-absorbing resin member including a laser light-absorptive material(hereinafter sometimes referred to as an "absorbing resin member") are superposed on each other and irradiated with laser light from the transmitting resin member side to allow the interface thereof with the absorbing resin member to generate heat for welding. Resin compositions applied to molded articles for such a use are required to have capability of being welded by irradiation with laser light (laser weldability).

On the other hand, in molded articles, product information or others are often printed or drawn on the surfaces of molded articles, for design and the display of information for finished articles, and also distinguishability of the component at the time of assembly, for example. When they are required to maintain their visibility over a long period, laser marking may be used in view of reliability.

Further, in recent years, a study has also been made of a resin composition that can be used as a laser-transmitting resin member in laser welding, the resin composition being capable of being laser-marked (Patent Literature 2).

[Citation List]

[Patent Literature]

[Patent Literature 1] Japanese Patent No. 6183822
[Patent Literature 2] Japanese Patent Laid-Open No. 2020-50822

[Summary of Invention]

[Technical Problem]

In laser welding, the transmitting resin member is made transparent in order to increase the laser light transmittance as much as possible, and conversely the absorbing resin member is colored with a pigment or the like in order to increase the laser light absorptance.

However, in terms of the designability of the laser-welded article that is to be laser-welded, the transmitting resin member is also preferably colored with a color similar to that of the absorbing resin member, and, for example, the absorbing resin member and the transmitting resin member may be colored black.

However, when the transmitting resin member is colored with a pigment having high laser light absorptance, like the absorbing resin member, laser light is not transmitted, and laser welding is impossible. Therefore, for the coloration of the transmitting resin member, colorant is used that inhibit the transmission of laser light as little as possible.

On the other hand, when a transmitting resin member is subjected to laser marking, it cannot be marked if laser light is transmitted. Accordingly, a resin composition is also needed that is capable of being laser-marked while transmitting laser light to some extent.

The present invention aims to solve such a problem and an object thereof is to provide a resin composition that is for use as a laser-transmitting resin member in laser welding and capable of being laser-marked, and a molded article including the resin composition, the use of the resin composition, a kit, a laser-welded article, and a method for producing a laser-welded article.

[Solution to Problem]

In light of the above problem, it has been found that by blending butadiene rubber-containing polystyrene and an infrared-transmitting colorant into a thermoplastic polyester resin, laser transmission properties and laser marking properties can both be achieved.

Specifically, the problem has been solved by the following means.

<1> A resin composition including 100 parts by mass of a thermoplastic polyester resin, 5 to 100 parts by mass of butadiene rubber-containing polystyrene, and 0.01 to 5 parts by mass of an infrared-transmitting colorant, the resin composition being for use as a laser-transmitting resin member in laser welding and capable of being laser-marked.

<2> The resin composition according to <1>, wherein the thermoplastic polyester resin includes a polybutylene terephthalate resin.

<3> The resin composition according to <1> or <2>, further including 1 to 100 parts by mass of a polycarbonate resin per 100 parts by mass of the thermoplastic polyester resin.

<4> The resin composition according to <3>, wherein the polycarbonate resin is contained in an amount of 1 to 500 parts by mass per 100 parts by mass of the butadiene rubber-containing polystyrene.

<5> The resin composition according to any one of <1> to <4>, wherein the butadiene rubber-containing polystyrene is high impact polystyrene (HIPS).

<6> The resin composition according to any one of <1> to <5>, further including an epoxy compound.

<7> The resin composition according to any one of <1> to <6>, further including an inorganic filler.

<8> The resin composition according to any one of <1> to <7>, further including a phosphorus-based stabilizer.

<9> The resin composition according to any one of <1> to <8>, wherein the infrared-transmitting colorant is an infrared-transmitting dye.

<10> The resin composition according to any one of <1> to <9>, wherein the infrared-transmitting colorant includes a black dye and/or a black dye composition including two or more chromatic dyes.

<11> The resin composition according to <10>, wherein the resin composition is capable of being laser-marked with a color having higher lightness than that of the black dye and/or black dye composition.

<12> The resin composition according to any one of <1> to <11>, wherein a content of nickel in the infrared-transmitting colorant is 0.8% by mass or less.

<13> The resin composition according to any one of <1> to <12>, wherein a content of a pigment other than the infrared-transmitting colorant in the resin composition is 1% by mass or less based on a content of the infrared-transmitting colorant.

<14> The resin composition according to any one of <1> to <13>, wherein a content of nigrosine in the resin composition is 1% by mass or less based on the content of the infrared-transmitting colorant.

<15> The resin composition according to any one of <1> to <14>, wherein when the resin composition is molded into a 1.5 mm thick test piece, the test piece has a light transmittance at a wavelength of 1064 nm is 12% or more.

<16> The resin composition according to any one of <1> to <15>, wherein when the resin composition is molded to a thickness of 1.5 mm and partially subjected to laser marking, a color difference $\Delta E$ between a color tone of a laser-marked portion and a color tone of a non-laser-marked portion is 10.0 or more by an SCE method.

<17> A molded article obtained by molding a composition including a thermoplastic polyester resin and an infrared-transmitting colorant, the molded article having a light transmittance of 12% or more at a wavelength of 1064 nm, and a color difference $\Delta E$ between a color tone of a laser-marked portion and a color tone of a non-laser-marked portion being 7.0 or more by an SCE method, when the molded article is subjected to laser marking.

<18> A molded article formed from the resin composition according to any one of <1> to <16>.

<19> The molded article according to <17> or <18>, wherein the molded article is laser-marked.

<20> Use of the resin composition according to any one of <1> to <16> for a resin member for use as a laser-transmitting resin member in laser welding and capable of being laser-marked.

<21> A kit including the resin composition according to any one of <1> to <16>; and a light-absorptive resin composition including a thermoplastic resin and light-absorptive colorant.

<22> The kit according to <21>, wherein when the resin composition and the light-absorptive resin composition are each molded to a thickness of 1.5 mm, a difference therebetween in color tone L, $\Delta E$, is 6.0 or less by an SCE method.

<23> A laser-welded article obtained by laser-welding together a laser-transmitting resin member formed from the resin composition according to any one of <1> to <16>, and a laser-absorbing resin member formed from a light-absorptive resin composition including a thermoplastic resin and light-absorptive colorant.

<24> The laser-welded article according to <23>, wherein the laser-transmitting resin member is capable of being laser-marked.

<25> The laser-welded article according to <23>, wherein the laser-transmitting resin member is laser-marked.

<26> A method for producing a laser-welded article, including irradiating a laser-transmitting resin member formed from the resin composition according to any one of <1> to <16> with a laser to laser-mark the laser-transmitting resin member, and laser-welding together the laser-transmitting resin member and a laser-absorbing resin member formed from a light-absorptive resin composition including a thermoplastic resin and light-absorptive colorant.

<27> The method for producing a laser-welded article according to <26>, wherein the laser welding is performed by galvano-scanning laser welding.

[Advantageous Effect of Invention]

The present invention can provide a resin composition that is for use as a laser-transmitting resin member in laser welding and capable of being laser-marked, and a molded article using the resin composition, a kit, the use of the resin composition, a laser-welded article, and a method for producing a laser-welded article.

[Brief Description of Drawings]

[Figure 1] Figure 1 shows schematic views showing a test piece (transmitting resin member I) for measuring laser welding strength in Examples.

[Figure 2] Figure 2 shows schematic views showing a test piece (absorbing resin member II) for measuring laser welding strength in Examples.

[Figure 3] Figure 3 shows schematic views showing a test piece (a combination of the transmitting resin member I and the absorbing resin member II) for measuring laser welding strength in Examples.

[Figure 4] Figure 4 is a schematic view showing a method for measuring laser welding strength in Examples.

[Description of Embodiment]

A mode for carrying out the present invention (hereinafter simply referred to as "this embodiment") will be described in detail below. This embodiment below is an illustration for describing the present invention, and the present invention is not limited to only this embodiment.

As used herein, "to" is used in the sense of including the numerical values described before and after it as the lower limit value and the upper limit value, respectively.

As used herein, various physical property values and characteristic values are at 23°C unless otherwise noted.

The resin composition of this embodiment includes 100 parts by mass of a thermoplastic polyester resin, 5 to 100 parts by mass of butadiene rubber-containing polystyrene, and 0.01 to 5 parts by mass of an infrared-transmitting colorant and is characterized in that it is for use as a laser-transmitting resin member in laser welding and capable of being laser-marked. The configuration as described above enables a resin composition that is for use as a laser-transmitting resin member in laser welding and capable of being laser-marked can be provided.

Further, in the resin composition of this embodiment, the color difference between the transmitting resin member and its laser-marked portion is large, and excellent laser marking can be achieved. In addition, the transmitting resin member formed from the resin composition of this embodiment has high transmittance for light having a wavelength of 1060 nm and can be excellent in laser transmission properties. Furthermore, the transmitting resin member can retain high strength even after a pressure cooker test. In addition, the color difference between a molded article (transmitting resin member) formed from the resin composition of this embodiment and an absorbing resin member is also small, and the designability can be excellent. Further, the color difference between the laser-marked portion of the transmitting resin member and an absorbing resin member can be increased.

When a conventional laser-marking agent (for example, carbon black) is blended into a thermoplastic polyester resin, the blend does not transmit light and is therefore difficult to use as a transmissive resin composition (transmitting resin member) in laser welding. On the other hand, when a colorant that easily transmits a laser (for example, light having a wavelength of 1060 nm) is blended, a resin composition excellent in designability and capable of being laser-welded can be provided, but laser marking is difficult. In this embodiment, while an infrared-transmitting colorant is blended into a thermoplastic polyester resin to ensure designability, butadiene rubber-containing polystyrene is also blended thereinto to provide a resin composition capable of being laser-marked and also capable of being laser-welded.

The embodiment of the present invention will be described below.

<Thermoplastic Polyester Resin>

The resin composition of this embodiment includes a thermoplastic polyester resin (hereinafter sometimes simply referred to as a "polyester resin").

The type of the polyester resin used in this embodiment is not particularly limited. Examples thereof include polybutylene terephthalate resins and polyethylene terephthalate resins, and polybutylene terephthalate resins are preferred.

A polybutylene terephthalate resin is a resin obtained by polycondensing terephthalic acid as the main component of an acid component and 1,4-butanediol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The 1,4-butanediol as the main component of a diol component means that 50% by mass or more of the diol component is 1,4-butanediol. Preferably 60% by mass or more, more preferably 70% by mass or more, of the diol component is 1,4-butanediol, and 80% by mass or more, 90% by mass or more, or 95% by mass or more of the diol component may be 1,4-butanediol.

When the polybutylene terephthalate resin includes another acid component, examples thereof include isophthalic acid and dimer acid. When the polybutylene terephthalate resin includes another diol component, examples thereof include polyalkylene glycols such as polytetramethylene glycol (PTMG).

When one obtained by copolymerizing polytetramethylene glycol is used as the polybutylene terephthalate resin, the proportion of the tetramethylene glycol component in the copolymer is preferably 3 to 40% by mass, more preferably 5 to 30% by mass, and further preferably 10 to 25% by mass. By setting such a copolymerization proportion, there is a tendency that the balance between laser weldability and heat resistance is better, which is preferred.

When dimer acid-copolymerized polybutylene terephthalate is used as the polybutylene terephthalate resin, the proportion of the dimer acid component in all carboxylic acid components is preferably 0.5 to 30 mol %, more preferably 1 to 20 mol %, and further preferably 3 to 15 mol % in terms of carboxylic acid groups. By setting such a copolymerization proportion, there is a tendency that the balance of laser weldability, long-term heat resistance, and toughness is better, which is preferred.

When isophthalic acid-copolymerized polybutylene terephthalate is used as the polybutylene terephthalate resin, the proportion of the isophthalic acid component in all carboxylic acid components is preferably 1 to 30 mol %, more preferably 1 to 20 mol %, and further preferably 3 to 15 mol % in terms of carboxylic acid groups. By setting such a copolymerization proportion, there is a tendency that the balance of laser weldability, heat resistance, injection moldability, and toughness is better, which is preferred.

For the polybutylene terephthalate resin used in this embodiment, a resin in which 90% by mass or more of the acid component and 90% by mass or more of the diol component are terephthalic acid and 1,4-butanediol, respectively (polybutylene terephthalate homopolymer), or a copolymerized polybutylene terephthalate resin obtained by copolymerizing polytetramethylene glycol, or an isophthalic acid-copolymerized polybutylene terephthalate resin is preferred.

The intrinsic viscosity of the polybutylene terephthalate resin is preferably 0.5 to 2 dL/g. In terms of moldability and mechanical characteristics, one having an intrinsic viscosity in the range of 0.6 to 1.5 dL/g is more preferred. By using one having an intrinsic viscosity of 0.5 dL/g or more, there is a tendency that the mechanical strength of the obtained molded article improves more. By using one having an intrinsic viscosity of 2 dL/g or less, there is a tendency that the fluidity of the polybutylene terephthalate resin improves to improve the moldability to thereby improve the laser weldability more.

The intrinsic viscosity is a value measured at 30°C in a 1:1 (mass ratio) mixed solvent of tetrachloroethane and phenol.

When two or more polybutylene terephthalate resins are included, the intrinsic viscosity is the intrinsic viscosity of the mixture.

The amount of the terminal carboxy groups of the polybutylene terephthalate resin can be appropriately selected and set, but is usually 60 eq/ton or less, preferably 50 eq/ton or less, and further preferably 30 eq/ton or less. By setting the amount of the terminal carboxy groups at 50 eq/ton or less, the generation of gas during the melting and molding of the polybutylene terephthalate resin can be more effectively suppressed. The lower limit value of the amount of the terminal carboxy groups is not particularly limited, but is usually 5 eq/ton.

When two or more polybutylene terephthalate resins are included, the amount of the terminal carboxy groups is the amount of the terminal carboxy groups of the mixture.

The amount of the terminal carboxy groups of the polybutylene terephthalate resin is a value obtained by dissolving 0.5 g of the polybutylene terephthalate resin in 25 mL of benzyl alcohol and titrating with a 0.01 mol/L sodium hydroxide solution in benzyl alcohol. Examples of the method for adjusting the amount of the terminal carboxy groups include any conventionally known method, such as controlling polymerization conditions including the ratio between starting materials used, polymerization temperature, and pressure reduction method in polymerization, and reacting a terminal-blocking agent.

The polyethylene terephthalate resin used in this embodiment is a resin obtained by polycondensing terephthalic acid as the main component of an acid component and ethylene glycol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The ethylene glycol as the main component of a diol component means that 50% by mass or more of the diol component is ethylene glycol. Preferably 60% by mass or more, more preferably 70% by mass or more, of the diol component is ethylene glycol, and 80% by mass or more, 90% by mass or more, or 95% by mass or more of the diol component may be ethylene glycol.

When the polyethylene terephthalate resin includes another acid component, examples of another acid component include dicarboxylic acids such as phthalic acid, isophthalic acid, naphthalenedicarboxylic acid, 4,4'-diphenyl sulfone dicarboxylic acid, 4,4'-biphenyldicarboxylic acid, 1,4-cyclohexanedicarboxylic acid, 1,3-phenylenedioxydiacetic acid, and structural isomers thereof, malonic acid, succinic acid, and adipic acid, and derivatives thereof, and oxyacids such as p-hydroxybenzoic acid and glycolic acid, or derivatives thereof.

When the polyethylene terephthalate resin includes another diol component, examples of another diol component include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S.

Further, the polyethylene terephthalate resin may be one obtained by copolymerizing 1.0 mol % or less, preferably 0.5 mol % or less, and further preferably 0.3 mol % or less of a branched component, for example, a trifunctional acid having ester-forming ability such as tricarballylic acid, trimesic acid, or trimellitic acid, or a tetrafunctional acid having ester-forming ability such as pyromellitic acid, or a trifunctional or tetrafunctional alcohol having ester-forming ability such as glycerin, trimethylolpropane, or pentaerythritol.

The intrinsic viscosity of the polyethylene terephthalate resin is preferably 0.3 to 1.5 dL/g, more preferably 0.3 to 1.2 dL/g, and further preferably 0.4 to 0.8 dL/g.

The intrinsic viscosity of the polyethylene terephthalate resin is a value measured at 30°C in a 1:1 (mass ratio) mixed solvent of tetrachloroethane and phenol.

The concentration of the terminal carboxy groups of the polyethylene terephthalate resin is preferably 3 to 60 eq/ton, more preferably 5 to 50 eq/ton, and further preferably 8 to 40 eq/ton. By setting the terminal carboxy group concentration at 60 eq/ton or less, gas is not easily generated during the melting and molding of the resin material so that there is a tendency that the mechanical characteristics of the obtained molded article improve. Conversely, by setting the terminal carboxy group concentration at 3 eq/ton or more, there is a tendency that the heat resistance, residence heat stability, and hue of the obtained molded article improve, which is preferred.

The terminal carboxy group concentration of the polyethylene terephthalate resin is a value obtained by dissolving 0.5 g of the polyethylene terephthalate resin in 25 mL of benzyl alcohol and titrating with a 0.01 mol/L sodium hydroxide solution in benzyl alcohol.

The content of the polyester resin (preferably the polybutylene terephthalate resin) in this embodiment is preferably 25% by mass or more, more preferably 30% by mass or more, and further preferably 35% by mass or more in the resin composition. By setting the content of the polyester resin (preferably the polybutylene terephthalate resin) at such a lower limit value or more, there is a tendency that the welding strength of the molded body increases more. The content of the polyester resin (preferably the polybutylene terephthalate resin) is preferably 75% by mass or less, more preferably 65% by mass or less, further preferably 55% by mass or less, and still more preferably 45% by mass or less in the resin composition. By setting the content of the polyester resin (preferably the polybutylene terephthalate resin) at such an upper limit value or less, there is a tendency that the laser marking properties increase more.

The resin composition of this embodiment may include only one polyester resin or two or more polyester resins. When the resin composition of this embodiment includes two or more polyester resins, the total amount is preferably in the above range.

<Butadiene Rubber-Containing Polystyrene>

The resin composition of this embodiment includes 5 to 100 parts by mass of butadiene rubber-containing polystyrene per 100 parts by mass of the thermoplastic polyester resin. When the resin composition of this embodiment includes butadiene rubber-containing polystyrene, the laser marking properties are good while the laser weldability is maintained. It is presumed that the butadiene moiety functions as a laser-marking agent.

The content of butadiene rubber (butadiene rubber content) in the butadiene rubber-containing polystyrene is preferably 2.0% by mass or more, more preferably 3.0% by mass or more, further preferably 4.0% by mass or more, still more preferably 5.0% by mass or more, and even more preferably 6.0% by mass or more. By setting the content of butadiene rubber at the lower limit value or more, there is a tendency that the laser marking properties increase more. The content of the butadiene rubber is preferably 20.0% by mass or less, more preferably 15.0% by mass or less, further preferably 12.5% by mass or less, still more preferably 10.0% by mass or less, and even more preferably 8.5% by mass or less. By setting the content of the butadiene rubber at the upper limit value or less, there is a tendency that the laser light transmission properties increase to improve the weldability more.

The content of styrene in the butadiene rubber-containing polystyrene is preferably 40% by mass or more, more preferably 45% by mass or more, further preferably more than 50% by mass, still more preferably 60% by mass or more, even more preferably 70% by mass or more, still further preferably 80% by mass or more, and even further preferably 90% by mass or more. The content of styrene in the butadiene rubber-containing polystyrene is preferably 97% by mass or less and may be 95% by mass or less.

The total of the content of butadiene rubber and styrene in the butadiene rubber-containing polystyrene used in this embodiment preferably accounts for 80% by mass or more, more preferably 85% by mass or more, and further preferably 90% by mass or more of the whole and may be 95% by mass or more. By such a configuration, there is a tendency that the laser marking properties of the resin composition improve more.

The butadiene rubber in the butadiene rubber-containing polystyrene means butadiene rubber units, and the styrene in the butadiene rubber-containing polystyrene means styrene units.

The mass average molecular weight of the butadiene rubber-containing polystyrene is preferably 50,000 or more, more preferably 80,000 or more, further preferably 100,000 or more, still more preferably 120,000 or more, and even more preferably 150,000 or more. By setting the mass average molecular weight of the butadiene rubber-containing polystyrene at the lower limit value or more, there is a tendency that the mechanical strength of the molded article improves more. The mass average molecular weight of the butadiene rubber is preferably 1,000,000 or less, more preferably 800,000 or less, further preferably 500,000 or less, still more preferably 300,000 or less, and even more preferably 250,000 or less. By setting the mass average molecular weight of the butadiene rubber at the upper limit value or less, there is a tendency that the fluidity during molding increases to improve the moldability more.

Examples of the butadiene-containing polystyrene used in this embodiment include High Impact Polystyrene (HIPS) and ABS resins, and particularly HIPS is preferred. HIPS includes a graft copolymer obtained by graft-polymerizing a styrene monomer onto polybutadiene or a styrene-butadiene random copolymer as a trunk polymer. By using HIPS, there is a tendency that the laser marking properties improve more.

The content of butadiene-containing polystyrene in the resin composition of this embodiment is 5 parts by mass or more, preferably 10 parts by mass or more, more preferably 20 parts by mass or more, further preferably 30 parts by mass or more, still more preferably 40 parts by mass or more, and even more preferably 45 parts by mass or more per 100 parts by mass of the thermoplastic polyester resin. By setting the content of butadiene-containing polystyrene at the lower limit value or more, there is a tendency that the laser marking properties increase more. The content of the butadiene-containing polystyrene is 100 parts by mass or less, preferably 90 parts by mass or less, more preferably 80 parts by mass or less, further preferably 70 parts by mass or less, still more preferably 60 parts by mass or less, and even more preferably 55 parts by mass or less per 100 parts by mass of the thermoplastic polyester resin. By setting the content of the butadiene-containing polystyrene at the upper limit value or less, there is a tendency that the welding strength increases more.

The resin composition of this embodiment may include only one butadiene rubber-containing polystyrene or two or more butadiene rubber-containing polystyrenes. When the resin composition of this embodiment includes two or more butadiene rubber-containing polystyrenes, the total amount is preferably in the above range.

<Polycarbonate Resin>

The resin composition of this embodiment may or may not include a polycarbonate resin. When the resin composition of this embodiment includes a polycarbonate resin, the resin composition preferably includes 1 to 100 parts by mass of the polycarbonate resin per 100 parts by mass of the thermoplastic polyester resin. By blending the polycarbonate resin, the laser light transmission properties and the weldability can be improved.

For the polycarbonate resin used in this embodiment, a known polycarbonate resin can be used. A polycarbonate resin is usually a thermoplastic polymer or copolymer that may be branched, obtained by reacting a dihydroxy compound or a dihydroxy compound and a small amount of a polyhydroxy compound with phosgene or a carbonic acid diester. The method for producing the polycarbonate resin is not particularly limited, and one produced by a conventionally known phosgene method (interfacial polymerization method) or melting method (transesterification method) can be used; however, a polycarbonate resin produced by a melt polymerization method is preferred in terms of laser transmission properties and laser weldability.

As the dihydroxy compound as a starting material, an aromatic dihydroxy compound is preferred, and examples thereof include 2,2-bis(4-hydroxyphenyl)propane (that is, bisphenol A), tetramethyl bisphenol A, bis(4-hydroxyphenyl)-p-diisopropylbenzene, hydroquinone, resorcinol, and 4,4-dihydroxydiphenyl, preferably bisphenol A. A compound obtained by bonding one or more tetraalkylphosphonium sulfonates to the aromatic dihydroxy compound can also be used.

Among those described above, an aromatic polycarbonate resin derived from 2,2-bis(4-hydroxyphenyl)propane, or an aromatic polycarbonate copolymer derived from 2,2-bis(4-hydroxyphenyl)propane and another aromatic dihydroxy compound is preferred as the polycarbonate resin. The polycarbonate resin may be a copolymer such as a copolymer with a polymer or an oligomer having a siloxane structure. Two or more of the above-described polycarbonate resins may be mixed and used.

The viscosity average molecular weight of the polycarbonate resin is preferably 5000 to 30000, more preferably 10000 to 28000, and further preferably 14000 to 24000. By using one having a viscosity average molecular weight of 5000 or more, there is a tendency that the mechanical strength of the obtained molded article improves more. By using one having a viscosity average molecular weight of 30000 or less, there is a tendency that the fluidity of the resin composition improves to improve the moldability and the laser weldability more.

The viscosity average molecular weight of the polycarbonate resin is viscosity average molecular weight [Mv] converted from solution viscosity measured at a temperature of 25°C using methylene chloride as a solvent.

The content of the polycarbonate resin in the resin composition of this embodiment is preferably 1.0 part by mass or more, more preferably 5.0 parts by mass or more, further preferably 7.5 parts by mass or more, still more preferably 10.0 parts by mass or more, and even more preferably 15.0 parts by mass or more per 100 parts by mass of the thermoplastic polyester resin. By setting the content of the polycarbonate resin at the lower limit value or more, there is a tendency that the laser transmission properties are increased to allow the resin composition to be welded with lower laser light energy. The content of the polycarbonate resin is preferably 100 parts by mass or less, more preferably 80.0 parts by mass or less, further preferably 60.0 parts by mass or less, still more preferably 45.0 parts by mass or less, and even more preferably 35.0 parts by mass or less per 100 parts by mass of the thermoplastic polyester resin. By setting the content of the polycarbonate resin at the upper limit value or less, there is a tendency that the laser welding strength improves more.

The content of the polycarbonate resin in the resin composition of this embodiment is preferably 1 part by mass or more, more preferably 5 parts by mass or more, further preferably 10 parts by mass or more, still more preferably 15 parts by mass or more, and even more preferably 20 parts by mass or more per 100 parts by mass of the butadiene rubber-containing polystyrene. By setting the content of the polycarbonate resin at the lower limit value or more, there is a tendency that the laser light transmission properties increase to allow the resin composition to be welded with lower laser light energy. The content of the polycarbonate resin is preferably 500 parts by mass or less, more preferably 400 parts by mass or less, further preferably 200 parts by mass or less, still more preferably 150 parts by mass or less, and even more preferably 75 parts by mass or less per 100 parts by mass of the butadiene rubber-containing polystyrene. By setting the content of the polycarbonate resin at the upper limit value or less, there is a tendency that the laser marking properties improve more.

The resin composition of this embodiment may include only one polycarbonate resin or two or more polycarbonate resins. When the resin composition of this embodiment includes two or more polycarbonate resins, the total amount is preferably in the above ranges.

<Infrared-Transmitting Colorant>

The resin composition of this embodiment includes 0.01 to 5 parts by mass of an infrared-transmitting colorant per 100 parts by mass of the thermoplastic polyester resin. Since the resin composition of this embodiment includes an infrared-transmitting colorant, laser marking can be achieved and laser welding is also achieved. Particularly, laser welding and laser marking can be achieved by general conditions for laser irradiation.

The infrared-transmitting colorant is not particularly limited as long as it is a colorant that transmits a certain proportion or more of a laser for laser welding. A known colorant can be used. For example, the infrared-transmitting colorant includes a colorant that transmits 20% or more of light having at least one wavelength between wavelengths of 900 to 1100 nm.

The infrared-transmitting colorant refers to, for example, such a colorant that gives a transmittance of 12% or more in the following procedure: a polybutylene terephthalate resin (for example, NOVADURAN (trade mark) 5008), 30% by mass of glass fibers (for example, trade name: T-127 manufactured by Nippon Electric Glass Co., Ltd.), and 0.2% by mass of a colorant (a colorant considered as an infrared-transmitting colorant) are blended so that the total is 100% by mass, and the light transmittance is measured by a measurement method described in Examples described later.

By blending the transmissive colorant in this embodiment the transmittance at a wavelength of 1064 nm can be 12% or more, further 20% or more, when the resin composition of this embodiment is molded to a thickness of 1.5 mm, for example. The upper limit is ideally 100% but may be 90% or less.

In this embodiment, the infrared-transmitting colorant is preferably an infrared-transmitting dye in view of increasing the transmittance of the molded article.

The infrared-transmitting colorant can be appropriately selected according to its use, and its color is not particularly limited either. The colorant used in this embodiment is preferably a black colorant (preferably a black dye) and/or a black colorant composition (preferably a black dye composition) including two or more chromatic colorants (preferably chromatic dyes). The black colorant composition more specifically means a colorant composition including two or more chromatic colorants such as red, blue, and green colorants combined to exhibit a black color.

A first example of the black colorant composition includes a green colorant and a red colorant. A second example of the black colorant composition includes a red colorant, a blue colorant, and a yellow colorant.

Specific examples of the infrared-transmitting colorant include nigrosine, naphthalocyanine, aniline black, phthalocyanine, porphyrin, perinone, quaterrylene, azo, azomethine, anthraquinone, pyrazolone, squaric acid derivatives, perylene, chromium complexes, and immonium. Azomethine, anthraquinone, and perinone are preferred, and among them, anthraquinone and perinone are more preferred.

In the infrared-transmitting colorant, the content of nickel is preferably 0.8% by mass or less of the infrared-transmitting colorant. By setting the content of nickel at 0.8% by mass or less, the environmental adaptability improves, and furthermore, there is a tendency that the laser marking properties also improve.

Examples of commercial products include e-BIND LTW-8731H, e-BIND LTW-8701H, and e-BIND LTW-8904, which are colorants manufactured by ORIENT CHEMICAL INDUSTRIES CO., LTD., Plast Yellow 8000, Plast Red M 8315, Plast Red 8370, and Oil Green 5602, which are colorants manufactured by ARIMOTO CHEMICAL Co., Ltd., Macrolex Yellow 3G, Macrolex Red EG, and Macrolex Green 5B, which are colorants manufactured by LANXESS, KP Plast HK, KP Plast Red HG, KP Plast Red H2G, KP Plast Blue R, KP Plast Blue GR, and KP Plast Green G, which are manufactured by Kiwa Chemical Industry Co., Ltd.

The colorants described in Japanese Patent No. 4157300 and the colorants described in Japanese Patent No. 4040460 can also be used, and the contents of these are incorporated herein.

The content of the infrared-transmitting colorant (preferably the infrared-transmitting dye) in the resin composition of this embodiment is 0.01 parts by mass or more, preferably 0.03 parts by mass or more, more preferably 0.05 parts by mass or more, further preferably 0.1 parts by mass or more, and still more preferably 0.2 parts by mass or more per 100 parts by mass of the thermoplastic polyester resin. By setting the content of the infrared-transmitting colorant (preferably the infrared-transmitting dye) at the lower limit value or more, the molded body is colored to increase the designability thereof. The upper limit value of the content is 5 parts by mass or less, preferably 3 parts by mass or less, more preferably 2 parts by mass or less, further preferably 1 part by mass or less, and still more preferably 0.8 parts by mass or less. By setting the content of the infrared-transmitting colorant (preferably the infrared-transmitting dye) at the upper limit value or less, the bleedout of the infrared-transmitting colorant can be effectively suppressed.

The resin composition of this embodiment may include only one infrared-transmitting colorant or two or more infrared-transmitting colorants. When the resin composition of this embodiment includes two or more infrared-transmitting colorants, the total amount is preferably in the above range.

The resin composition of this embodiment usually includes substantially no light-absorptive colorant (for example, carbon black). The expression "include substantially no..." means that the content is at a level, or less, that does not inhibit light transmission for the laser welding of the light-transmissive resin composition if the light-transmissive resin contains a light-absorptive colorant. For example, the content is less than 0.001 parts by mass per 100 parts by mass of the thermoplastic resins.

<Reactive Compound>

The resin composition of this embodiment may or may not further include a reactive compound (preferably an epoxy compound). When the resin composition of this embodiment includes a reactive compound, there is a tendency that the welding strength increases.

The reactive compound is preferably a compound that can chemically react with a carboxy group or a hydroxy group present at an end of the polybutylene terephthalate resin to cause a crosslinking reaction or chain length extension. The reactive compound preferably includes one or more selected from the group consisting of epoxy compounds, carbodiimide compounds, compounds having an oxazoline group (ring), compounds having an oxazine group (ring), compounds having a carboxy group, and compounds having an amide group, more preferably includes at least one selected from epoxy compounds and carbodiimide compounds, and further preferably includes an epoxy compound. Particularly, in the resin composition of this embodiment, 90% by mass or more, further 95% by mass or more, and particularly 99% by mass or more of the reactive compound is preferably an epoxy compound.

The epoxy compound is not particularly limited as long as it is a compound having one or more epoxy groups in one molecule. Known epoxy compounds can be widely used. When the resin composition of this embodiment includes the epoxy compound, there is a tendency that the range of laser irradiation conditions expands.

First examples of the epoxy compound include non-elastomers such as glycidyl compounds, epoxy compounds having an aromatic ring, and alicyclic epoxy compounds, and at least an epoxy compound having an aromatic ring is preferably included.

Specific first examples of the epoxy compound include epoxy compounds having an aromatic ring, such as bisphenol A type epoxy compounds (including bisphenol A diglycidyl ether), bisphenol F type epoxy compounds (including bisphenol F diglycidyl ether), biphenyl type epoxy compounds (including bis(glycidyloxy)biphenyl), resorcin type epoxy compounds (including resorcinol diglycidyl ether), novolac type epoxy compounds, glycidyl benzoate ester, diglycidyl terephthalate ester, and diglycidyl orthophthalate ester, (di)glycidyl ethers such as methyl glycidyl ether, butyl glycidyl ether, 2-ethylhexyl glycidyl ether, decyl glycidyl ether, stearyl glycidyl ether, phenyl glycidyl ether, butylphenyl glycidyl ether, allyl glycidyl ether, neopentyl glycol diglycidyl ether, ethylene glycol diglycidyl ether, glycerin diglycidyl ether, and propylene glycol diglycidyl ether, paraffin-based (for example, saturated fatty acid-based) or olefin-based (for example, unsaturated fatty acid-based) (di)glycidyl esters such as glycidyl sorbate ester, diglycidyl adipate ester, epoxidized linseed oil, and epoxidized soybean oil, and alicyclic epoxy compounds such as vinylcyclohexene dioxide and dicyclopentadiene oxide.

Especially, bisphenol A type epoxy compounds, novolac type epoxy compounds, bisphenol F type epoxy compounds, biphenyl type epoxy compounds, and the like are preferred, and particularly orthocresol/novolac type epoxy resins (polyglycidyl ether compounds of O-cresol-formaldehyde polycondensates) are more preferred.

Examples of commercial products include "Joncryl ADR4368C" (trade name: manufactured by BASF), EPIKOTE 1003 (trade name: manufactured by Mitsubishi Chemical Corporation), and manufactured by NIPPON STEEL & SUMIKIN CHEMICAL CO., LTD. (trade name: YDCN704).

The epoxy compound of the first example preferably has a mass average molecular weight of 15000 or less, more preferably 10000 or less. The lower limit value is not particularly limited, but the mass average molecular weight is preferably 100 or more, more preferably 500 or more. By setting such a range, there is a tendency that the effect of this embodiment is more effectively exerted.

The epoxy compound of the first example preferably has an epoxy equivalent of 100 g/eq or more or 100 g/mol or more, more preferably 150 g/eq or more or 150 g/mol or more. The epoxy compound preferably has an epoxy equivalent of 1500 g/eq or 1500 g/mol or less, more preferably 900 g/eq or less or 900 g/mol or less, and further preferably 800 g/eq or less or 800 g/mol or less.

By setting the epoxy equivalent at the lower limit value or more, there is a tendency that the welding strength and the hydrolysis resistance of the welded body increase more. By setting the epoxy equivalent at the upper limit value or less, there is a tendency that the resin composition has increased fluidity and can be thus easily molded.

A second example of the epoxy compound includes an elastomer including an epoxy group. By including an elastomer including an epoxy group, there is a tendency that a molded article having higher impact resistance is obtained.

A first example of the elastomer including an epoxy group is a copolymer obtained by copolymerizing an α-olefin and a glycidyl ester of an α,β-unsaturated acid, and an unsaturated monomer copolymerizable with these, as needed. The α-olefin and the glycidyl ester of the α,β-unsaturated acid are preferably used in an amount of 60% by mass or more based on all components to be copolymerized.

Examples of the α-olefin include ethylene, propylene, butene-1, and pentene-1. Two or more of these may be used. Examples of the glycidyl ester of the α,β-unsaturated acid include glycidyl acrylate, glycidyl methacrylate, glycidyl ethacrylate, and glycidyl itaconate. Two or more of these may be used. Examples of the vinyl-based monomer copolymerizable with the components include vinyl ethers, vinyl esters such as vinyl acetate and vinyl propionate, acrylates and methacrylates of methyl, ethyl, propyl, butyl, and the like, acrylonitrile, and styrene. Two or more of these may be used.

Preferred examples of the elastomer including an epoxy group in the first example include ethylene/glycidyl methacrylate copolymers, ethylene/glycidyl methacrylate/vinyl acetate copolymers, ethylene/glycidyl methacrylate/alkyl acrylate copolymers, and ethylene/alkyl acrylate/vinyl acetate copolymers. Particularly, in view of excellent toughness and more improvement of the moist heat resistance and impact resistance of the molded article, ethylene/glycidyl methacrylate/alkyl acrylate (preferably butyl acrylate) copolymers are preferred. Specific examples of the elastomer including an epoxy group in the first example are available under the trade names "Lotader" (trade mark) AX8900 and AX8700 manufactured by ARKEMA K.K.

A second example of the elastomer including an epoxy group is a core-shell type elastomer. The core-shell type elastomer disperses easily in the polybutylene terephthalate-based resin because of the small molecular particle diameter thereof, and there is a tendency that the welding strength increases due to the reaction of the reactive groups. Examples of the core-shell type elastomer include those obtained by graft-copolymerizing a monomer component onto a core polymer.

The core is preferably a rubbery polymer, and examples thereof include acrylonitrile-acrylic rubbery polymer-styrene graft copolymers (ASA resins), methyl methacrylate-acrylic rubbery polymer-styrene graft copolymers (MSA resins), methyl methacrylate-acrylonitrile-acrylic rubbery polymer-styrene graft copolymers (MASA resins), polyorganosiloxane-containing rubbery polymers. Polyorganosiloxane-containing rubbery polymers are preferred.

The glass transition temperature of the polyorganosiloxane-containing rubbery polymer is usually 0°C or less, especially preferably -20°C or less, and further preferably -30°C or less. The rubber component is not particularly limited as long as it contains a polyorganosiloxane rubber, and specific examples of the rubber component include polyorganosiloxane rubbers and (IPN type) composite rubbers of polyorganosiloxane rubbers and polyalkyl acrylate rubbers.

Specific examples of the monomer component graft-copolymerizable with the core include aromatic vinyl compounds, vinyl cyanide compounds, (meth)acrylate compounds, (meth)acrylic acid compounds, epoxy group-containing (meth)acrylate compounds such as glycidyl (meth)acrylate, maleimide compounds such as maleimide, N-methylmaleimide, and N-phenylmaleimide; α,β-unsaturated carboxylic acid compounds such as maleic acid, phthalic acid, and itaconic acid, and anhydrides thereof (for example, maleic anhydride).

For specific examples of the rubbery polymer, the aromatic vinyl compounds, the vinyl cyanide compounds, and the (meth)acrylate compounds, the description in the paragraphs 0042 to 0046 of Japanese Patent Laid-Open No. 2019-059813 can be referred to, and the contents of these are incorporated herein.

The elastomer including an epoxy group in the second example is preferably a compound obtained by graft-polymerizing an epoxy group-containing (meth)acrylate compound onto a polyorganosiloxane-containing rubbery polymer (preferably a composite rubber of a polyorganosiloxane rubber and a polyalkyl acrylate rubber).

Specific examples of the elastomer including an epoxy group in the second example include "METABLEN ((trade mark), the same applies below) S-2002" manufactured by MITSUBISHI RAYON CO., LTD.

In addition, for the epoxy compounds that can be used in this embodiment, the description in the paragraphs 0060 to 0067 of Japanese Patent Laid-Open No. 2019-019305 can be referred to, and the contents of this are incorporated herein.

When the resin composition of this embodiment includes the reactive compound (preferably the epoxy compound), its content is preferably 0.2 parts by mass or more, more preferably 0.3 parts by mass or more, further preferably 0.4 parts by mass or more, still more preferably 0.5 parts by mass or more, and even more preferably 0.8 parts by mass or more per 100 parts by mass of the thermoplastic polyester resin. By setting the content at the lower limit value or more, there is a tendency that the welding strength increases. In terms of the upper limit value, the content of the reactive compound is preferably 18 parts by mass or less, more preferably 15 parts by mass or less, and further preferably 10 parts by mass or less per 100 parts by mass of the thermoplastic polyester resin. By setting the content of the reactive compound at the upper limit value or less, there is a tendency that the fluidity increases more to improve the moldability.

The resin composition of this embodiment may include only one reactive compound or two or more reactive compounds. When the resin composition of this embodiment includes two or more reactive compounds, the total amount is preferably in the above range.

<Inorganic Filler>

The resin composition of this embodiment preferably further includes an inorganic filler. When the resin composition of this embodiment includes an inorganic filler, particularly a fibrous inorganic filler, preferably glass fibers, there is a tendency that the mechanical strength and also the heat-resistant strength increases to improve the durability of the laser-welded article more.

The inorganic filler that can be contained and used in the resin composition of this embodiment has the effect of improving the mechanical properties of a resin composition obtained by blending the inorganic filler into a resin, and commonly used inorganic fillers for plastics can be used. Preferably fibrous inorganic fillers such as glass fibers, carbon fibers, basalt fibers, wollastonite, and potassium titanate fibers can be used. Granular or amorphous fillers such as calcium carbonate, titanium oxide, feldspar-based minerals, clay, organoclay, and glass beads; plate-like fillers such as talc; and scale-like inorganic fillers such as glass flakes, mica, and graphite can also be used. Especially, fibrous fillers, particularly glass fibers, are preferably used in terms of mechanical strength, rigidity, and heat resistance. Either glass fibers having a round cross-sectional shape or those having an irregular cross-sectional shape can be used.

For the inorganic filler, one surface-treated with a surface treatment agent such as a coupling agent is more preferably used. Glass fibers with a surface treatment agent adhered thereto are excellent in durability, moist heat resistance, hydrolysis resistance, and heat shock resistance and therefore preferred.

As the surface treatment agent, any conventionally known one can be used, and specific preferred examples include silane coupling agents such as aminosilane-based, epoxysilane-based, allylsilane-based, and vinylsilane-based silane coupling agents. Among these, aminosilane-based surface treatment agents are preferred, and specific preferred examples include γ-aminopropyltriethoxysilane, γ-aminopropyltrimethoxysilane, and γ-(2-aminoethyl)aminopropyltrimethoxysilane.

Preferred examples of other surface treatment agents include epoxy resin-based surface treatment agents such as a novolac type, and bisphenol A type epoxy resin-based surface treatment agents, and particularly treatment with a novolac type epoxy resin-based surface treatment agent is preferred.

The silane-based surface treatment agent or the epoxy resin-based surface treatment agent may be used alone, or a plurality of the silane-based surface treatment agents or a plurality of the epoxy resin-based surface treatment agents may be used. Both the silane-based surface treatment agent and the epoxy resin-based surface treatment agent are also preferably used in combination. The glass fibers in this embodiment mean a fibrous glass material, and more specifically glass fibers having a chopped shape obtained by bundling 1,000 to 10,000 glass fibers and cutting the bundled glass fibers to a predetermined length is preferred.

For the glass fibers in this embodiment, those having a number average fiber length of 0.5 to 10 mm are preferred, and those having a number average fiber length of 1 to 5 mm are more preferred. By using glass fibers having such a number average fiber length, the mechanical strength can be more improved. For the number average fiber length, glass fibers whose fiber lengths are to be measured are randomly extracted in an image obtained by observation under an optical microscope, their long sides are measured, and the number average fiber length is calculated from the found values. The observation magnification is 20X and the number of glass fibers to be measured is 1,000 or more. The number average fiber length generally corresponds to the cut length.

The cross sections of the glass fibers may have any shape such as a circle, an ellipse, an oval, a rectangle, a shape of a rectangle with semicircles joined to both short sides thereof, or an eyebrow shape, but a circle is preferred. The circle here is intended to include a circle in a geometric sense and also those usually referred to as circles in the technical field of this embodiment.

In terms of the lower limit, the number average fiber diameter of the glass fibers is preferably 4.0 $\mu$m or more, more preferably 4.5 $\mu$m or more, and further preferably 5.0 $\mu$m or more. In terms of the upper limit, the number average fiber diameter of the glass fibers is preferably 15.0 $\mu$m or less, more preferably 14.0 $\mu$m or less. By using glass fibers having a number average fiber diameter in such a range, there is a tendency that a molded article better in mechanical strength is obtained. The number average fiber diameter of the glass fibers is calculated from found values obtained by randomly extracting glass fibers whose fiber diameters are to be measured, in an image obtained by observation under an electron microscope, and measuring fiber diameters near the central portions. The observation magnification is 1,000X and the number of glass fibers to be measured is 1,000 or more. The number average fiber diameter of glass fibers having a cross section other than a circular cross section is the number average fiber diameter when the shape of the cross section is converted into a circle having the same area as the area of the cross section.

For the glass fibers, fibers obtained by melt-spinning glass such as generally supplied E glass (Electrical glass), C glass (Chemical glass), A glass (Alkali glass), S glass (High strength glass), D glass, R glass, and alkali-resistant glass are used. Any glass that can be formed into glass fibers can be used, and the glass is not particularly limited. In this embodiment, E glass is preferably included.

The glass fibers used in this embodiment is preferably surface-treated with a surface treatment agent such as a silane coupling agent, for example, $\gamma$-methacryloxypropyltrimethoxysilane, $\gamma$-glycidoxypropyltrimethoxysilane, or $\gamma$-aminopropyltriethoxysilane. The amount of the surface treatment agent adhering is preferably 0.01 to 1% by mass of the glass fibers. Those surface-treated with a lubricant such as a fatty acid amide compound or a silicone oil, an antistatic agent such as a quaternary ammonium salt, a resin having film-forming ability such as an epoxy resin or a urethane resin, or a mixture of a resin having film-forming ability and a heat stabilizer, a flame retardant, and the like can also be used as needed.

The glass fibers are available as a commercial product. Examples of the commercial product include T-286H, T-756H, T-127, and T-289H manufactured by Nippon Electric Glass Co., Ltd., DEFT2A manufactured by Owens Corning, HP3540 manufactured by PPG, and CSG3PA820 manufactured by Nitto Boseki Co., Ltd.

The content of the inorganic filler (preferably the glass fibers) in the resin composition of this embodiment is preferably 10 parts by mass or more, more preferably 15 parts by mass or more, further preferably 20 parts by mass or more, still more preferably 25 parts by mass or more, and even more preferably 30 parts by mass or more per 100 parts by mass of the thermoplastic resin components (the total of the thermoplastic polyester resin, the polycarbonate resin, the butadiene rubber-containing polystyrene, and the like). By setting the content of the inorganic filler (preferably the glass fibers) at the lower limit value or more, there is a tendency that the strength of the base material of the laser-welded article increases, and that the heat resistance of the laser-welded article increases. In terms of the upper limit value, the content of the inorganic filler is preferably 70 parts by mass or less, more preferably 60 parts by mass or less, and further preferably 50 parts by mass or less per 100 parts by mass of the thermoplastic resins. By setting the content of the inorganic filler at the upper limit value or less, there is a tendency that the welding strength of the interface portion increases.

The content of the inorganic filler (preferably the glass fibers) in the resin composition of this embodiment is preferably 20% by mass or more, more preferably 25% by mass or more, of the resin composition. The content of the inorganic filler (preferably the glass fibers) is preferably 40% by mass or less, more preferably 38% by mass or less.

The resin composition of this embodiment may include only one inorganic filler (preferably glass fibers) or two or more inorganic fillers (preferably glass fibers). When the resin composition of this embodiment includes two or more inorganic fillers (preferably glass fibers), the total amount is preferably in the above ranges.

<Stabilizer>

The resin composition of this embodiment preferably contains a stabilizer, and as the stabilizer, a phosphorus-based stabilizer and a phenol-based stabilizer are preferred.

As the phosphorus-based stabilizer, any known one can be used. Specific examples include oxoacids of phosphorus such as phosphoric acid, phosphonic acid, phosphorous acid, phosphinic acid, and polyphosphoric acid; metal acid pyrophosphates such as sodium acid pyrophosphate, potassium acid pyrophosphate, and calcium acid pyrophosphate; phosphates of group 1 or group 2 metals such as potassium phosphate, sodium phosphate, cesium phosphate, and zinc phosphate; organophosphate compounds, organophosphite compounds, and organophosphonite compounds, and organophosphite compounds are particularly preferred.

Examples of the phenol-based stabilizer include hindered phenol-based antioxidants.

For the details of these, the description in the paragraphs 0105 to 0111 of International Publication No. WO 2020/013127 can be referred to, and the contents of this are incorporated herein.

The content of the stabilizer is usually 0.001 parts by mass or more, preferably 0.01 parts by mass or more, and usually 2.0 parts by mass or less, preferably 1.0 part by mass or less, per 100 parts by mass of the thermoplastic polyester resin. By setting the content of the stabilizer at the lower limit value of the range or more, the effect as the stabilizer can be more effectively obtained. By setting the content of the stabilizer at the upper limit value of the range or less, the effect does not peak, and such content is thus economical.

The resin composition of this embodiment may include only one stabilizer or two or more stabilizers. When the resin composition of this embodiment includes two or more stabilizers, the total amount is preferably in the above range.

<Other Components>

The resin composition of this embodiment may contain other components as needed, in addition to those described above, as long as the desired various physical properties are not significantly impaired. Examples of other components include various resin additives. One of other components may be contained, or two or more other components may be contained in any combination and proportion.

Specific examples include a thermoplastic resin other than a thermoplastic polyester resin, butadiene rubber-containing polystyrene, or a polycarbonate resin, a flame retardant, a release agent, an ultraviolet-absorbing agent, an antistatic agent, an antifogging agent, an antiblocking agent, a fluidity-improving agent, a plasticizer, a dispersing agent, and an antimicrobial agent. The resin composition of this embodiment preferably includes at least one of a stabilizer and a release agent.

In this embodiment, the total of the thermoplastic polyester resin, the butadiene rubber-containing polystyrene, and the polycarbonate resin preferably accounts for 90% by mass or more, preferably 95% by mass or more, and further preferably 99% by mass or more of the thermoplastic resin components included in this embodiment. The upper limit is 100% by mass.

In the resin composition of this embodiment, the content of a pigment other than the infrared-transmitting colorant is preferably 1% by mass or less based on the content of the infrared-transmitting colorant. By such a configuration, the effect of the present invention is more effectively exerted.

In the resin composition of this embodiment, the content of nigrosine is preferably 1% by mass or less based on the content of the infrared-transmitting colorant. By such a configuration, the effect of the present invention is more effectively exerted.

<Characteristics of Resin Composition>

The resin composition of this embodiment is preferably capable of being laser-marked and excellent in the sharpness of printing. For example, the resin composition is preferably capable of being laser-marked with a color having higher lightness than that of the infrared-transmitting colorant (a black colorant and/or a black colorant composition, preferably a black dye and/or a black dye composition). That is, a black transmitting resin member is preferably laser-marked with a color brighter than black. More specifically, when the resin composition of this embodiment is molded to a thickness of 1.5 mm and partially subjected to laser marking, the color difference $\Delta E$ (absolute value) between the color tone of the laser-marked portion and the color tone of the non-laser-marked portion is preferably 7.0 or more, more preferably 10.0 or more, and further preferably 11.0 or more, by the SCE method. The upper limit of the color difference $\Delta E$ is not particularly limited, but the color difference $\Delta E$ is practically, for example, 25.0 or less.

In this embodiment, the color difference $\Delta E$ by the SCE method between the laser-marked portion of the transmitting resin member and an absorbing resin member is preferably large. Specifically, the color difference $\Delta E$ between the laser-marked portion of a transmitting resin member having a thickness of 1.5 mm formed from the resin composition of this embodiment and an absorbing resin member having a thickness of 1.5 mm formed from a light-absorptive resin composition including a thermoplastic resin and light-absorptive colorant is preferably 8.0 or more, more preferably 10.0 or more. The upper limit value is not particularly limited, and even if the color difference ΔE is 30.0 or less, further 25.0 or less, the required performance is sufficiently delivered.

The resin composition of this embodiment is preferably excellent in laser transmission properties. Specifically, when the resin composition is molded into a 1.5 mm thick test piece, the test piece has a light transmittance at a wavelength of 1064 nm of preferably 12% or more, more preferably 20% or more, further preferably 25% or more, and still more preferably 35% or more. By setting the light transmittance at the lower limit value or more, there is a tendency that the laser weldability improves more. The resin composition of this embodiment includes the infrared-transmitting colorant, and therefore there is a substantial upper limit value for the light transmittance. The value is, for example, 90% or less, and may be 80% or less. The test piece here means a non-laser-marked portion.

The resin composition of this embodiment is preferably excellent in tensile strength retention rate after high temperature and high humidity treatment (PCT (121°C × 2 atm × 100% RH) treatment) is performed for 100 hours. Specifically, the resin composition of this embodiment preferably has a tensile strength retention rate of 35% or more, more preferably 40% or more, and further preferably 50% or more after PCT100 treatment as measured according to ISO 527-1 and 527-2. The upper limit value is not particularly limited, but is practically, for example, 95% or less.

The color tones and color difference by the SCE method, the light transmittance, and the tensile strength retention rate after high temperature and high humidity treatment are measured according to the description in Examples given later in detail.

For example, the resin composition of this embodiment may also be a resin composition including a thermoplastic polyester resin and an infrared-transmitting colorant, wherein when the resin composition is molded into a 1.5 mm thick test piece, the test piece has a light transmittance at a wavelength of 1064 nm is 12% or more, and when the resin composition is molded to a thickness of 1.5 mm and partially subjected to laser marking, the color difference ΔE between the color tone of the laser-marked portion and the color tone of the non-laser-marked portion is 7.0 or more by the SCE method. Such a composition can be prepared, for example, by blending butadiene rubber-containing polystyrene and scrutinizing its type.

<Method for Producing Resin Composition>

The resin composition of this embodiment can be produced by an ordinary method for the preparation of a resin composition. Usually, components and a variety of additives added as desired are put together, well mixed, and then melted and kneaded by a single-screw or twin-screw extruder. It is also possible to supply components to an extruder using a feeder, without previously mixing them or after previously mixing only some of them, and melt and knead them to prepare the resin composition of this embodiment. It is possible to melt and knead some components such as a colorant with a thermoplastic resin to prepare a masterbatch, then blend the remaining components thereinto, and melt and knead the blend.

When an inorganic filler is used, it is also preferably supplied from a side feeder in the middle of the cylinder of an extruder.

The heating temperature in melting and kneading can be usually appropriately selected from the range of 220 to 300°C. When the temperature is too high, decomposition gas is easily generated, which may cause opacification. Therefore, it is desirable to select a screw configuration taking shear heat generation and the like into account. In view of suppressing decomposition during kneading and during molding in a subsequent step, the use of an antioxidant and a heat stabilizer is desired.

<Molded Article and Method for Producing Molded Article>

The resin composition in this embodiment is molded according to a known method.

The method for producing a molded article is not particularly limited, and a molding method generally adopted for a polyester resin composition can be arbitrarily adopted. Examples thereof include an injection molding method, an ultrahigh speed injection molding method, an injection compression molding method, a two-color molding method, a hollow molding method such as gas assist, a molding method involving use of a heat-insulating mold, a molding method involving use of a rapidly heated mold, foaming (also including a supercritical fluid), insert molding, an IMC (in-mold coating) molding method, an extrusion method, a sheet molding method, a thermoforming method, a rotational molding method, a laminate molding method, a press molding method, and a blow molding method, and especially injection molding is preferred.

For the details of injection molding, the description in the paragraphs 0113 to 0116 of Japanese Patent No. 6183822 can be referred to, and the contents of these are incorporated herein.

The molded article of this embodiment is formed from the resin composition of this embodiment and used as a laser-transmitting resin member in laser welding. A transmitting resin member formed from the resin composition of this embodiment is capable of being laser-marked.

One example of the molded article of this embodiment is a molded article obtained by molding a composition including a thermoplastic polyester resin and an infrared-transmitting colorant, the molded article having a light transmittance of 12% or more at a wavelength of 1064 nm, and the color difference $\Delta E$ between the color tone of a laser-marked portion and the color tone of a non-laser-marked portion being 7.0 or more by the SCE method when the molded article is subjected to laser marking.

<Kit and Laser-Marked Laser-Welded Article>

The kit of this embodiment has the resin composition of this embodiment and a light-absorptive resin composition. The resin composition of this embodiment plays a role as a light-transmissive resin composition. Such a kit is excellent in laser weldability and is preferably used as a kit for the production of a molded article obtained by laser welding (laser-welded article). Further, laser marking can also be performed. One example of the laser-welded article of this embodiment is a laser-welded article capable of being laser-marked, and another example is a laser-marked laser-welded article.

Thus, the resin composition of this embodiment included in the kit plays a role as a light-transmissive resin composition, and a molded article formed from such a light-transmissive resin composition serves as a transmitting resin member for laser light in laser welding. On the other hand, a molded article formed from a light-absorptive resin composition serves as an absorbing resin member for laser light in laser welding. Further, the transmitting resin member also serves as a substrate to be laser-marked.

In this embodiment, the color difference $\Delta E$ by the SCE method between the non-laser-marked portion of the laser-transmitting resin member and the laser-absorbing resin member is preferably small.

Specifically, when the resin composition of this embodiment and the light-absorptive resin composition in the kit of this embodiment are each molded to a thickness of 1.5 mm, the difference therebetween in color tone L, $\Delta E$, by the SCE method is preferably 6.0 or less. The molded pieces here is in a state in which the molded pieces are not subjected to laser marking. The $\Delta E$ is more preferably 4.0 or less, more preferably 3.8 or less. The lower limit value is ideally 0; however, even when the lower limit value is 0.5 or more, further 1.0 or more, the required performance is sufficiently satisfied.

Thus, the laser-welded article of this embodiment can be produced by a production method including irradiating a laser-transmitting resin member formed from the resin composition of this embodiment with a laser to laser-mark the laser-transmitting resin member, and laser-welding together the laser-transmitting resin member and a laser-absorbing resin member formed from a light-absorptive resin composition including a thermoplastic resin and light-absorptive colorant. When the laser-welded article of this embodiment is produced, either laser welding or laser marking may be performed first, or they may be simultaneously performed.

<<Light-Absorptive Resin Composition>>

The light-absorptive resin composition used in this embodiment includes a thermoplastic resin and light-absorptive colorant. The light-absorptive resin composition may further include a reinforcing material.

Examples of the thermoplastic resin include polyamide resins, olefin-based resins, vinyl-based resins, styrene-based resins, acrylic resins, polyphenylene ether resins, polyester resins, polycarbonate resins, and polyacetal resins. In terms of good compatibility with the light-transmissive resin composition (the resin composition of this embodiment), polyester resins and polycarbonate resins are particularly preferred, and polyester resins are further preferred. One thermoplastic resin may be used, or two or more thermoplastic resins may be used.

Preferred examples of the thermoplastic resin component used in the light-absorptive resin composition include the same thermoplastic resin components as included in the resin composition of this embodiment (light-transmissive resin composition).

For the inorganic filler, the same inorganic filler as described for the resin composition of this embodiment (light-transmissive resin composition) is preferred, and the preference of the amount blended and others are also the same.

The light-absorptive colorant has a maximum absorption wavelength in the range of the wavelength of laser light to be radiated, specifically, in the range of wavelengths of 800 nm to 1100 nm in this embodiment. The light-absorptive colorant refers to, for example, such colorant that gives a transmittance less than 15%, further a transmittance of 10% or less in the following procedure: a polybutylene terephthalate resin (for example, NOVADURAN (trade mark) 5008), 30% by mass of glass fibers (for example, trade name: T-127 manufactured by Nippon Electric Glass Co., Ltd.), and 0.3 parts by mass of colorant (colorant considered as light-absorptive colorant) are blended, and the light transmittance is measured by a measurement method described in Examples described later.

Specific examples of the light-absorptive colorant include inorganic pigments (black pigments such as carbon black (for example, acetylene black, lampblack, thermal black, furnace black, channel black, and ketjen black), red pigments such as iron oxide red, orange pigments such as molybdate orange, and white pigments such as titanium oxide) and organic pigments (yellow pigments, orange pigments, red pigments, blue pigments, green pigments, and the like). Especially, inorganic pigments, which generally have strong hiding power, are preferred, and black pigments are further preferred. Two or more of the light-absorptive colorant may be used in combination. The content of the light-absorptive colorant is preferably 0.01 to 30 parts by mass per 100 parts by mass of the resin component.

In the kit, preferably 80% by mass or more, more preferably 90% by mass or more, and still more preferably 95 to 100% by mass of the components in the resin composition of this embodiment excluding the colorant and the reinforcing material, is the same as the components in the light-absorptive resin composition excluding the light-absorptive colorant and the reinforcing material.

<<Laser Welding Method>>

Next, a laser welding method will be described. In this embodiment, a molded article can be produced by laser-welding together a molded article (transmitting resin member) formed from the resin composition of this embodiment and a molded article (absorbing resin member) obtained by molding the light-absorptive resin composition. That is, the production method of this embodiment disclosed is a method for producing a molded article, including laser-welding a transmitting resin member and an absorbing resin member together, wherein the transmitting resin member is formed from the resin composition of this embodiment. By performing laser welding, the transmitting resin member and the absorbing resin member can be strongly welded together without using an adhesive.

The resin composition of this embodiment may be laser-welded by any known laser welding method but is suitable for galvano-scanning laser welding. The galvano-scanning laser welding is also referred to as Quasi-simultaneous welding and is a method involving scanning laser light by a built-in galvano-mirror. By using the galvano-scanning laser welding, the entire welding portion is substantially simultaneously heated, and therefore there is a tendency that the residual stress of the obtained laser-welded article decreases.

The shapes of the transmitting resin member and the absorbing resin member are not particularly limited but are usually shapes having at least a part for surface contact (a flat surface or a curved surface) because the members are joined together by laser welding to be used. In laser welding, laser light transmitted through the transmitting resin member is absorbed by the absorbing resin member to cause melting, and both members are thus welded. The molded article formed from the resin composition of this embodiment can have high transmission properties for laser light and therefore can be preferably used as the transmitting resin member. The thickness of the member through which laser light is transmitted (the thickness, in the laser transmission direction, of the portion through which laser light is transmitted) can be appropriately selected according to the use, the formulation of the resin composition, and others, and is, for example, 5 mm or less, preferably 4 mm or less.

The laser light source used for laser welding can be selected according to the light absorption wavelength of the light-absorptive colorant, and a laser having a wavelength in the range of 800 to 1100 nm is preferred. Examples of the type of the laser light to be radiated include solid-state lasers, fiber lasers, semiconductor lasers, gas lasers, and liquid lasers. For example, YAG (yttrium-aluminum-garnet crystal) lasers (wavelength 1064 nm, 1070 nm), or LD (laser diode) lasers (wavelength 808 nm, 840 nm, 940 nm, 980 nm) can be preferably used. Especially, laser light having wavelengths of 940 nm, 980 nm, and 1070 nm is preferred.

The laser focus diameter is preferably $\Phi$ 0.1 mm or more, more preferably 0.2 mm or more, and still more preferably 0.5 mm or more. By setting the laser focus diameter at the lower limit value or more, the welding strength of the laser welding portion can be more increased. The laser irradiation diameter is preferably $\varphi$ 30 mm or less, more preferably 10 mm or less, and still more preferably 3.0 mm or less. By setting at the upper limit value or less, the welding width can be more effectively controlled.

The laser light focus diameter can be selected according to the width and height of the welding surface.

Laser light may be focused or defocused on the joining surface and is preferably appropriately selected according to the required welded body.

The laser power is preferably 1 W or more, more preferably 10 W or more, further preferably 30 W or more, and still more preferably 100 W or more. By setting the laser power at the lower limit value or more, more sufficient welding strength can be obtained even if the welding time is short. The laser power is preferably 1000 W or less, more preferably 500 W or less, further preferably 400 W or less, and still more preferably 300 W or less. By setting the laser power at the upper limit value or less, the cost for the laser welding facility can be effectively reduced.

The laser irradiation speed (irradiation scanning speed) is preferably 10 mm/s or more, more preferably 30 mm/s or more, further preferably 50 mm/s or more, and still more preferably 500 mm/s or more. By setting the laser irradiation speed at the lower limit value or more, the residual stress of the laser-welded article can be more effectively reduced. The laser irradiation speed is preferably 20000 mm/s or less, more preferably 10000 mm/s or less, further preferably 5000 mm/s or less, and even more preferably 3000 mm/s or less. By setting the laser irradiation speed at the upper limit value or less, more sufficient welding strength can be obtained for the welded body. Regarding the laser scanning method, the power of the laser, the line to be welded, the scanning speed, and/or the scanning method are preferably adjusted according to the shape of the joining surface, in view of welding efficiency, welding strength, welding appearance, and apparatus load.

More specifically, for example, when the transmitting resin member and the absorbing resin member are welded together, the parts to be welded of both are first brought into contact with each other. At this time, it is desirable to bring both parts to be welded into surface contact with each other, and the welding parts may have flat surfaces, curved surfaces, or a combination of a flat surface and a curved surface. When the superimposed state is maintained, a transparent plate material such as a glass plate, a quartz plate, or an acrylic plate may be put on the transmitting resin member, that is, on the laser irradiation side, to thereby apply pressure. Particularly, putting a glass plate or a quartz plate is suitable for promoting the dissipation of heat generated during laser welding and obtaining a good appearance. Alternatively, pressure may be applied by put metal plates so as to surround the periphery of the portion to be welded of the transmitting resin member.

Then, laser light is radiated from the transmitting resin member side. At this time, laser light may be condensed at the interface between both using a lens as needed. The condensed beam is transmitted through the transmitting resin member and absorbed in the vicinity of the surface of the absorbing resin member to cause heat generation and melting. Then, the heat is also transferred to the transmitting resin member by heat transfer to cause melting to form a molten pool at the interface between both. After cooling, both are joined together.

In this manner, the laser-welded article of the transmitting resin member and the absorbing resin member has high welding strength. The molded articles in this embodiment are intended to encompass completed articles and components as well as members as parts of these.

The laser-welded article obtained by laser-welding together the laser-transmitting resin member formed from the resin composition and the laser-absorbing resin member formed from the light-absorptive resin composition including the thermoplastic resin and the light-absorptive colorant may have a laser welding strength of be 800 N or more, 1000 N or more, or 1100 N or more, or 1200 N or more. The upper limit value of the laser welding strength is not particularly limited, but is practically 4000 N or less. The laser welding strength is measured according to the description in Examples given later.

<<Laser Marking Method>>

The molded article formed from the resin composition of this embodiment is capable of being laser-marked. Specifically, the laser-welded article composed of the transmitting resin member and the absorbing resin member in this embodiment is capable of being laser-marked on the transmitting resin member side.

By laser marking, the transmitting resin member can be provided with letters, a sign, a bar code, a QR code (trade mark), a drawing, a pattern, or the like. For the laser marking method, known methods can be widely adopted.

The wavelength of the laser light used in the laser marking method is more preferably 500 nm or more. In terms of the upper limit value, the laser oscillation wavelength is more preferably 1200 nm or less.

Specifically, in applications for color printing on a resin, a laser marker having a wavelength of 1,064 nm, 1090 nm, 1060 nm, or the like is used. It is also possible to use a laser marker of a type in which high power light is applied to crystals such as neodymium-modified yttrium-aluminum-garnet (YAG) or neodymium-modified yttrium-vanadium tetroxide ($Nd:YVO_4$) to generate a laser, followed by amplifying the laser by back-and-forth reflection by a mirror and converting it into a pulse laser by Q switch equipment. It is also possible to use a laser marker of a fiber type (a type in which laser light is generated and amplified using a plurality of laser diodes (LDs) at low power for fibers with ytterbium injected thereinto), which has been becoming the mainstream in recent years. A green laser marker having a wavelength of 532 nm can also be used.

The laser beam as the laser marker may be in a single mode or a multimode, and one having a narrowed beam diameter of, for example, 20 to 40 $\mu$m, or one having a wide beam diameter of, for example, 80 to 100 $\mu$m can also be used. A laser beam in a single mode having a beam diameter of 20 to 40 $\mu$m is preferred because marking can be performed with good contrast.

<Uses>

The resin composition of this embodiment is widely used for resin compositions including polyester resins and colorants. Specifically, the resin composition of this embodiment can be applied to various storage containers, components of electrical and electronic equipment, components of office automation (OA) equipment, components of household electrical equipment, components of machine mechanism, components of vehicle mechanism, and the like. Particularly, the resin composition of this embodiment can be suitably used for food containers, drug containers, containers for oil and fat product, hollow components of vehicle (various tanks, intake manifold components, and camera housings), electrical components of vehicle (various control units, ignition coil components, and the like), motor components, various sensor components, connector components, switch components, breaker components, relay components, coil components, transformer components, lamp components, and the like.

Particularly, the laser-welded article of this embodiment is preferably used for in-vehicle camera components, components of sensor case, motor components, and components for electronic control. More specifically, the laser-welded article of this embodiment is suitable for in-vehicle camera components and in-vehicle camera modules including in-vehicle camera components, housings for millimeter wave radars, housings for ECU cases, housings for sensor cases for sonar sensors and the like, and housings for motor components such as electric parking brakes.

[Examples]

The present invention will be more specifically described below by giving Examples. The materials, amounts used, proportions, details of treatment, treatment procedures, and others shown in the following Examples can be appropriately changed without departing from the spirit of the present invention. Therefore, the scope of the present invention is not limited to the specific examples shown below.

If the measurement equipment and the like used in the Examples are not available because of, for example, discontinued models, measurement can be performed using another equipment having equivalent performance.

1. Materials

The materials shown in the following Table 1 and Table 2 were used.

[Table 1]

| Component | Abbreviation | |
|---|---|---|
| Thermoplastic polyester resin | PBT | Polybutylene terephthalate resin manufactured by Mitsubishi Engineering-Plastics Corporation trade name: NOVADURAN (trade mark) 5008 intrinsic viscosity: 0.85dL/g amount of terminal carboxy groups: 20eq/ton |
| Polycarbonate resin | PC | manufactured by Mitsubishi Engineering-Plastics Corporation trade name: lupilon (trade mark) H4000 viscosity average molecular weight: 16,000 |
| Butadiene rubber-containing polystyrene | HIPS | Butadiene rubber-containing polystyrene(HIPS) manufactured by PS Japan Corporation, trade name: HT478 butadiene rubber content: 7.4% by mass mass average molecular weight: about 200,000 |
| Aromatic vinyl-based resin | AS | Acrylonitrile-styrene copolymer manufactured by DENKI KAGAKU KOGYO KABUSHIKI KAISHA, trade name: GR-AT-R MFR: 11g/10 min (220°C, 98N) acrylonitrile content: 31% by mass |
| Acrylonitrile-butadiene-styrene copolymer | ABS | Acrylonitrile-butadiene-styrene copolymer manufactured by NIPPON A&L INC. trade name: KRALASTIC SXH-330 butadiene rubber content: 17.5% by mass |
| Glass fibers | GF | Manufactured by Nippon Electric Glass Co., Ltd., trade name: T-127 number average fiber diameter: $13\mu m$, number average fiber length: 3mm |

[Table 2]

| Component | Abbreviation | |
|---|---|---|
| Epoxy compound | EP | Orthocresol novolac type epoxy resin polyglycidyl ether compound of O-cresol-formaldehyde polycondensate manufactured by NIPPON STEEL & SUMIKIN CHEMICAL CO., LTD., trade name: YDCN704 epoxy equivalent: 207(g/eq) |
| Phenol-based stabilizer | | Pentaerythritol tetrakis[3-(3,5-di-tert-butyl-4-hydroxyphenyl) propionate] manufactured by ADEKA Corporation, trade name: ADK STAB AO-60 |
| Phosphorus-based stabilizer | | Mixture of $O=P(OH)_n(OC_{13}H_{37})_{3-n}$ with n = 1 and that with n = 2 manufactured by ADEKA Corporation, trade name: ADK STAB AX-71 |
| Release agent | | Pentaerythritol tetrastearate manufactured by NOF CORPORATION, trade name: UNISTER H476D |

(continued)

| Component | Abbreviation | |
|---|---|---|
| Carbon black masterbatch | | Carbon black masterbatch carbon black/PBT=19/81(mass ratio) carbon black: manufactured by Mitsubishi Chemical Corporation, trade name:#650B, number average particle diameter 22nm, coloring power 125% polybutylene terephthalate: manufactured by Mitsubishi Engineering-Plastics Corporation, NOVADURAN (trade mark) 5008 |
| Infrared-transmitting dye | DY1 | Perinone-based dye (C.I. Solvent Red 179) manufactured by ARIMOTO CHEMICAL Co., Ltd., trade name: Plast Red 8370 |
| | DY2 | Anthraquinone-based dye (C.I. Solvent Blue 97) manufactured by Kiwa Chemical Industry Co., Ltd., trade name: KP Plast Blue R |
| | DY3 | Anthraquinone-based dye (C.I. Solvent yellow 163) manufactured by Kiwa Chemical Industry Co., Ltd., trade name: KP Plast Yellow HK |

<Preparation of Dye>

The dye was weighed and stirred for 5 hours before use.
The dyes described in the Table 2 all had a nickel content of 0.8% by mass or less.

2. Examples 1 to 6 and Comparative Examples 1 to 4

<Production of Light-Transmissive Resin Composition (Pellets)>

Components other than glass fibers as shown in Table 3 or Table 4 were placed in a stainless steel tumbler, and stirred and mixed for 1 hr. The amounts of the components in Table 3 or Table 4 are expressed in parts by mass. The obtained mixture was placed in the main hopper of a 30 mm, vent type twin-screw extruder (manufactured by The Japan Steel Works, Ltd., "TEX30α"), and the glass fibers (GF) were supplied from the seventh side feeder from the hopper. The mixture was kneaded under the conditions of a screw rotation speed of 200 rpm and a discharge of 40 kg/hr with the extruder barrel set temperatures C1 to C15 at 260°C and the die at 250°C, and extruded in the form of strands to obtain pellets of a resin composition.

<Production of Light-Absorptive Resin Composition (Pellets)>

Components other than glass fibers as shown in Table 5 were placed in a stainless steel tumbler and stirred and mixed for 1 hr. The amounts of the components in Table 5 are expressed in parts by mass. The obtained mixture was placed in the main hopper of a 30 mm, vent type twin-screw extruder (manufactured by The Japan Steel Works, Ltd., "TEX30α"), and the glass fibers (GF) were supplied from the seventh side feeder from the hopper. The mixture was kneaded under the conditions of a screw rotation speed of 200 rpm and a discharge of 40 kg/hr with the extruder barrel set temperatures C1 to C15 at 260°C and the die at 250°C, and extruded in the form of strands to obtain pellets of a resin composition.

<Molding of Plates for Color Tone Measurement (SCE Method) and Transmittance Measurement (Transmitting Resin Members)>

The resin composition pellets obtained above were dried at 120°C for 7 hours, and then 60 mm × 60 mm × 1.5 mm thick plates for color tone measurement (SCE method) and transmittance measurement (transmitting resin members) were injection-molded using an injection molding machine ("NEX80-9E" manufactured by NISSEI PLASTIC INDUSTRIAL CO., LTD.) at a cylinder temperature of 260°C and a mold temperature of 60°C under the following injection conditions.

(Injection Conditions)

Pressure keeping time: 10 sec

Cooling time: 10 sec
Injection speed: 90 mm/sec
Back pressure: 5 MPa
Screw rotation speed: 100 rpm

<Molding of Plate for Color Tone Measurement (SCE Method)

(Absorbing Resin Member)>

The obtained pellets were dried at 120°C for 7 hours, and then a 60 mm × 60 mm × 1.5 mm thick plate for color tone measurement (absorbing resin member) was injection-molded using an injection molding machine ("NEX80-9E" manufactured by NISSEI PLASTIC INDUSTRIAL CO., LTD.) at a cylinder temperature of 260°C and a mold temperature of 60°C under the following injection conditions.

(Injection Conditions)

Pressure keeping time: 10 sec
Cooling time: 10 sec
Injection speed: 90 mm/sec
Back pressure: 5 MPa
Screw rotation speed: 100 rpm

<Laser Marking Characteristics>

Laser-marking with a 10 mm × 10 mm square size was made on the central portion of the plate for color tone measurement (transmitting resin member) obtained above under the following conditions.

Laser marking apparatus: manufactured by Panasonic Corporation, LP-Z310
Type of laser: Yb fiber laser (wavelength 1064 nm)
Laser power: 80
Scan speed: 200 mm/s
Printing pulse period: 50 $\mu$s
A: laser marking was performed favorably
B: not A; for example, it was impossible to perform laser marking

The color tones L*a*b* (SCE) were measured in the following manner on the plates for color tone measurement (the laser-marked portion (LM portion) of the transmitting resin member, the plate for color tone measurement (the non-laser-marked portion (non-LM portion) of the transmitting resin member, and the absorbing resin member) obtained above.

«Color Tone L*a*b* (SCE) (Transmitting Resin Member, Non-Laser-Marked Portion) »

The color tone L*a*b* (SCE) of the central portion of the plate for color tone measurement (transmitting resin member) obtained above was measured. The measurement was performed using a spectrophotometer in accordance with ISO 7724/1, at D65/10 (reflected illumination, 10° viewing angle) by SCE (specular component excluded) method with a target mask SAV ($\varphi$ 4 mm).
For the spectrophotometer, CM-3600d manufactured by KONICA MINOLTA OPTICS, INC. was used.

«Color Tone L*a*b* (SCE) (Transmitting Resin Member, Laser-Marked Portion) »

Laser marking was performed by the method described above on the central portion of the plate for color tone measurement obtained above, and the color tone L*a*b* (SCE) of (the transmitting resin member) was measured. The measurement was performed using a spectrophotometer in accordance with ISO 7724/1, at D65/10 (reflected illumination, 10° viewing angle) and SCE (specular component excluded) method with a target mask SAV ($\varphi$ 4 mm) .
For the spectrophotometer, CM-3600d manufactured by KONICA MINOLTA OPTICS, INC. was used.

<<Color Tone L*a*b* (SCE) (Absorbing Resin Member) >>

The color tone L*a*b* (SCE) of the central portion of the plate for color tone measurement (absorbing resin member) obtained above was measured. The measurement was performed using a spectrophotometer in accordance with ISO 7724/1, at D65/10 (reflected illumination, 10° viewing angle) by SCE (specular component excluded) method with a target mask SAV (φ 4 mm).
For the spectrophotometer, CM-3600d) manufactured by KONICA MINOLTA OPTICS, INC. was used.

<<Color Tone Difference ΔE (SCE) (Non-LM Portion of Transmitting Resin Member and Absorbing Resin Member)>>

From the measurement results of the color tones L*a*b of the plates for color tone measurement (the non-laser-marked portion (non-LM portion) of the transmitting resin member, and the absorbing resin member) measured above, the color tone difference ΔE was calculated.
The results are shown in the following Table 3 and Table 4.

«Color Tone Difference ΔE (SCE) (LM Portion of Transmitting Resin Member and Absorbing Resin Member) »

From the measurement results of the color tones L*a*b of the plates for weather resistance test (the laser-marked portion (LM portion) of the transmitting resin member, and the absorbing resin member) measured above, the difference ΔE, the color tone difference, was calculated.
The results are shown in the following Table 3 and Table 4.

<1.5 mmt, Transmittance (Side Opposite to Gate)>

At a point 45 mm from the gate side in the plate (60 mm × 60 mm × 1.5 mm thick) for transmittance measurement obtained above in the central portion of the width of the test plate, the transmittance (%) at a wavelength of 1064 nm was determine using an ultraviolet-visible-near-infrared spectrophotometer.
For the ultraviolet-visible-near-infrared spectrophotometer, "UV-3100PC" with an integrating sphere manufactured by SHIMADZU CORPORATION was used.
The results are shown in the following Table 3 and Table 4.

<Tensile Strength Retention Rate after PCT Treatment>

The pellets of the light-transmissive resin composition obtained above were dried at 120°C for 7 hours, and then a 4.0 mm thick ISO multipurpose test piece was injection-molded according to JIS 7139 and JIS 7152 using an injection molding machine ("J-85AD-60H" manufactured by The Japan Steel Works, Ltd.).
The initial tensile strength (MPa) was measured according to JIS 7161 on the ISO multipurpose test piece (4.0 mm thick) obtained above. The ISO multipurpose test piece (4.0 mm thick) was treated using a pressure cooker tester (manufactured by ESPEC CORP., EH8-221M) under the conditions of a temperature of 121°C, a relative humidity of 100%, and a pressure of 2 atm for 100 hours, and conditioned in a 23°C × 50% environment. Then, the tensile strength (after treatment for 100 hr) was measured in the same manner (unit: MPa). Subsequently, the tensile strength retention rate was calculated (unit: %).

```
tensile strength retention rate (%) = (tensile strength after PCT
treatment for 100 hr /initial tensile strength) × 100
```

The results are shown in the following Table 3 and Table 4.

<Welding Strength>

<<Fabrication of Transmitting Resin Member>>

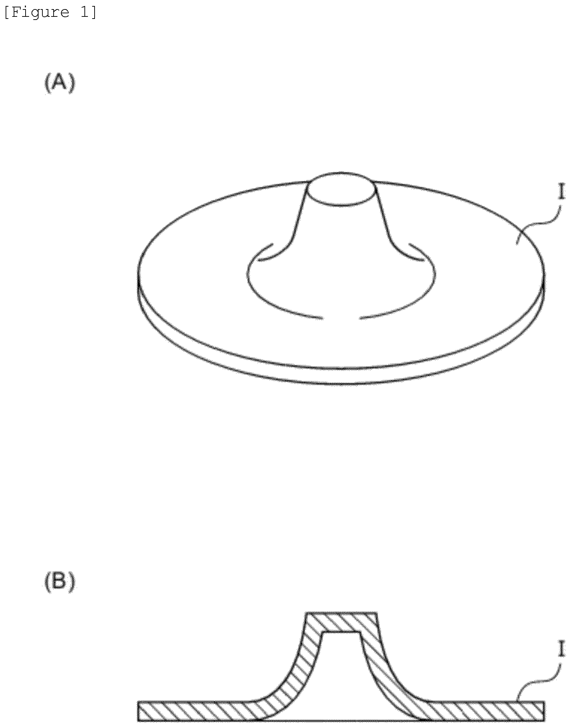

The light-transmissive resin composition (pellets) obtained above were dried at 120°C for 7 hours and then molded using an injection molding machine ("J55" manufactured by The Japan Steel Works, Ltd.) at a cylinder temperature of 260°C and a mold temperature of 60°C to fabricate a 1.5 mm thick molded article (transmitting resin member I) as shown in Figure 1.

<<Fabrication of Absorbing Resin Member>>

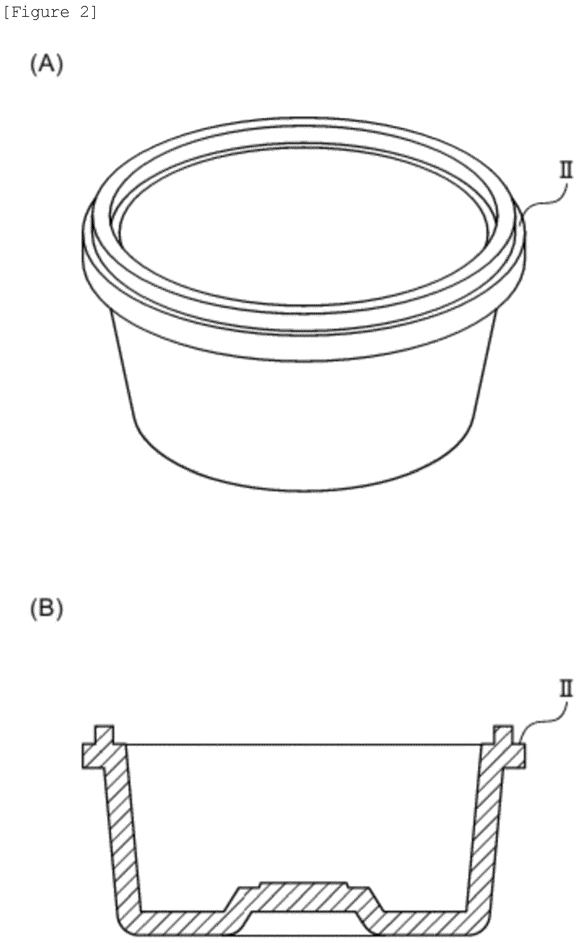

The light-absorptive resin pellets obtained above were dried at 120°C for 7 hours and then molded using an injection molding machine ("J55" manufactured by The Japan Steel Works, Ltd.) at a cylinder temperature of 260°C and a mold temperature of 60°C to fabricate a molded article (absorbing resin member II) as shown in Figure 2.

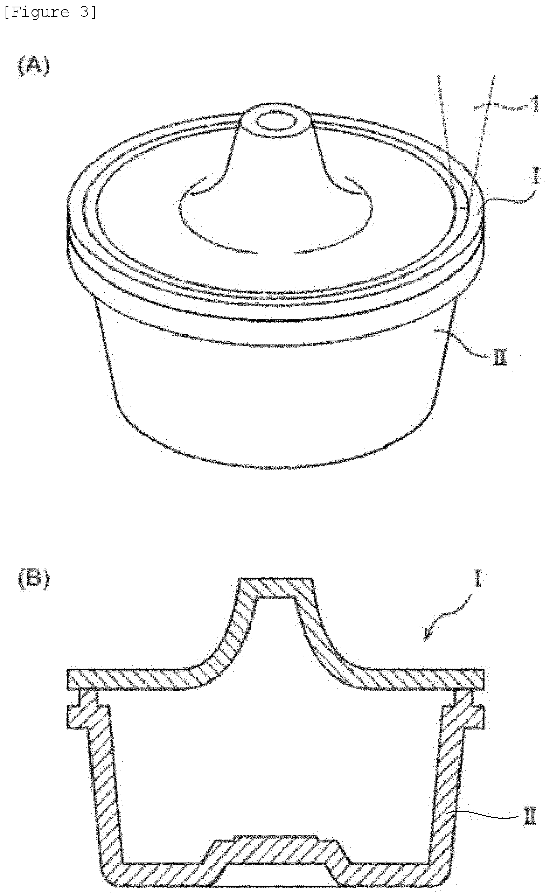

For the transmitting resin member and the absorbing resin member, the lid-like transmitting resin member I was superposed on the box-like absorbing resin member II, as shown in Figure 3, and a laser light source was disposed at a position vertically above the flange portion that was the overlapping portion of the transmitting resin member I and the absorbing resin member II. While a pressing force (extrusion force during welding) of 4.92 N/mm was applied to the overlapping portion of the transmitting resin member I and the absorbing resin member II in inward directions from both sides in the thickness direction using glass plates, a laser was radiated under the following conditions to obtain a laser-welded article.

The welding apparatus is as follows.

«Galvano-Scanning Laser Welding»

    Laser apparatus: manufactured by IPG, YLR-300-AC-Y14
    Wavelength: 1070 nm
    Collimator: 7.5 mm
    Laser type: fiber
    Laser power: 150 W
    Galvano-scanner: Fiber Elephants 21, manufactured by ARGES Aperture: 21 mm
    Laser irradiation speed: 900 mm/s
    Number of laser irradiation laps: 5 laps or 20 laps
    Circumference of welding portion: 137 mm

Laser light was defocused so that the spot diameter radiated on the welding surface was a diameter of 2 mm. Thus, the position of the laser scanner was adjusted.

<<Measurement of Laser Welding Strength>>

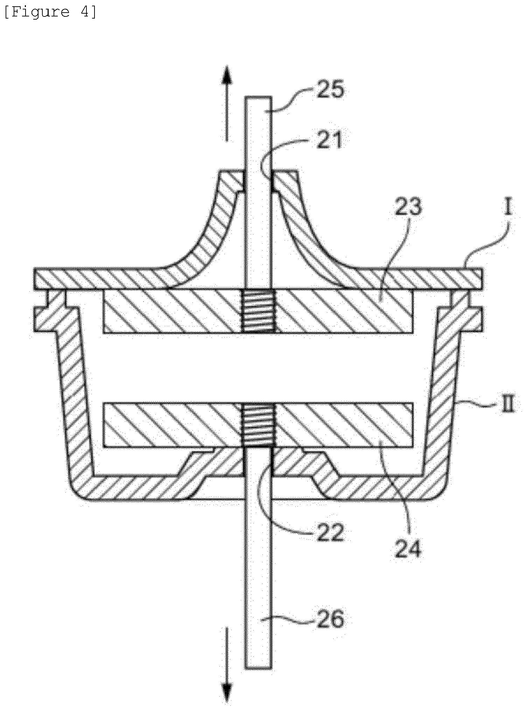

As shown in Figure 4, holes 21 and 22 were made in the transmitting resin member I and the absorbing resin member II, respectively. Jigs 23 and 24 for measuring the welding force were placed inside, and a box composed of the transmitting resin member I and the absorbing resin member II in that state was fabricated. Measurement jigs 25 and 26 were respectively inserted from the upper surface and the lower surface of the box, bonded to the jigs 23 and 24 housed inside, and pulled upward and downward (tensile speed: 5 mm/min), and the strength at which the transmitting resin member I and the absorbing resin member II separate (welding strength) was measured.

For the measuring apparatus, a 1 t TENSILON universal tester (load cell 10 kN) manufactured by ORIENTEC CO., LTD. was used.

The results are shown in the following Table 3 and Table 4.

[Table 3]

| | | | Example 1 | Example 2 | Example 3 | Example 4 | Example 5 |
|---|---|---|---|---|---|---|---|
| Formulation of transmitting resin member | Thermoplastic polyester resin | PBT | 600 | 60.0 | 60.0 | 60.0 | 70.0 |
| | Polycarbonate resin | PC | 100 | 10.0 | 20.0 | 30.0 | |
| | Butadiene rubber-containing polystyrene | HIPS | 300 | 30.0 | 20.0 | 10.0 | 30.0 |
| | Aromatic vinyl-based resin | AS | | | | | |
| | Acrylonitrile-butadiene-styrene copolymer | ABS | | | | | |
| | Glass fibers | GF | 44.0 | 44.0 | 44.0 | 44.0 | 44.0 |
| | Epoxy compound | EP | 1.47 | | 1.47 | 1.47 | 1.47 |
| | Phenol-based stabilizer | | 0.29 | 0.29 | 0.29 | 0.29 | 0.29 |
| | Phosphorus-based stabilizer | | 0.15 | 0.15 | 0.15 | 0.15 | 0.15 |
| | Release agent | | 0.44 | 0.44 | 0.44 | 0.44 | 0.44 |
| | Carbon black masterbatch | | | | | | |
| | Infrared-transmitting dye | DY1 | 0.12 | 0.12 | 0.12 | 0.12 | 0.12 |
| | | DY2 | 0.13 | 0.13 | 0.13 | 0.13 | 0.13 |
| | | DY3 | 0.11 | 0.11 | 0.11 | 0.11 | 0.11 |
| | Parts by mass of butadiene rubber-containing polystyrene per 100 parts by mass of thermoplastic polyester resin | | 500 | 50.0 | 33.3 | 16.7 | 42.9 |
| | Parts by mass of polycarbonate resin per 100 parts by mass of thermoplastic polyester resin | | 16.7 | 16.7 | 33.3 | 50.0 | 0.0 |
| | HIPS: PC mass ratio | | 3:1 | 3:1 | 1:1 | 1:3 | - |
| | | | | | | | |

(continued)

| | | | Example 1 | Example 2 | Example 3 | Example 4 | Example 5 |
|---|---|---|---|---|---|---|---|
| Characteristics of transmitting resin member | Laser marking characteristics | | A | A | A | A | A |
| | Color tone L* (SCE) (non-LM portion of transmitting resin member) | | 21.3 | 21.5 | 19.9 | 20.0 | 27.3 |
| | Color tone L* (SCE) (LM portion of transmitting resin member) | | 39.0 | 37.5 | 33.5 | 32.1 | 41.2 |
| | Color tone difference ∆E (SCE) LM portion and non-LM portion of transmitting resin member | | 18.2 | 16.4 | 13.8 | 12.2 | 14.4 |
| | 1.5mmt transmittance (side opposite to gate | % | 39 | 37 | 56 | 70 | 27 |
| | PCT100h treatment tensile strength retention rate | % | 84 | 44 | 77 | 54 | 85 |
| Welding characteristics | Welding strength 150W-900mm/s 5 laps | N | 891 | 880 | 1404 | 1295 | × |
| | Welding strength 150W-900mm/s 20 laps | N | 1432 | 1413 | 798 | 750 | 1307 |
| Color tone difference between members | Color tone difference ∆E (SCE) (non-LM portion of transmitting resin member and absorbing resin member) | | 2.4 | 2.8 | 3.2 | 2.8 | 5.2 |
| | Color tone difference ∆E (SCE) (non-LM portion of transmitting resin member and absorbing resin member) | | 17.7 | 14.9 | 10.8 | 9.5 | 18.6 |

[Table 4]

| | | | Example 6 | Comparative Example 1 | Comparative Example 2 | Comparative Example 3 | Comparative Example 4 |
|---|---|---|---|---|---|---|---|
| Formulation of transmitting resin member | Thermoplastic polyester resin | PBT | 60.0 | 1000 | 70.0 | 60.0 | 60.0 |
| | Polycarbonate resin | PC | 100 | | 30.0 | 20.0 | 10.0 |
| | Butadiene rubber-containing polvstvrene | HIPS | | | | | 30.0 |
| | Aromatic vinvi-based resin | AS | | | | 20.0 | |
| | Acrylonitrile-butadiene-styrene copolymer | ABS | 30.0 | | | | |
| | Glass fibers | GF | 44.0 | 43.9 | 44.0 | 40.0 | 44.0 |
| | Epoxy compound | EP | 1.47 | 1.46 | 1.47 | 1.33 | |
| | Phenol-based stabilizer | | 0.29 | 0.29 | 0.29 | 0.27 | 0.29 |
| | Phosphorus-based stabilizer | | 0.15 | | 0.15 | 0.13 | 0.15 |
| | Release agent | | 0.44 | 0.44 | 0.44 | 0.44 | 0.44 |
| | Carbon black masterbatch | | | | | | 2.85 |
| | | DY1 | 0.12 | 0.12 | 0.12 | 0.12 | 0.12 |
| | Infrared-transmitting dye | DY2 | 0.13 | 0.13 | 0.13 | 0.13 | 0.13 |
| | | DY3 | 0.11 | 0.11 | 0.11 | 0.11 | 0.11 |
| | Parts by mass of butadiene rubber-contain ng polystyrene per 100 parts by mass of thermoplastic polyester resin | | 50.0 | 0.0 | 0.0 | 0.0 | 50.0 |
| | Parts by mass of polycarbonate resin per 100 parts by mass of thermoplastic polyester resin | | 16.7 | 0.0 | 42.9 | 33.3 | 16.7 |
| | HIPS: PC mass ratio | | - | - | - | - | 3:1 |

EP 4 234 631 A1

(continued)

| | | | Example 6 | Comparative Example 1 | Comparative Example 2 | Comparative Example 3 | Comparative Example 4 |
|---|---|---|---|---|---|---|---|
| Characteristics of transmitting resin member | Laser marking characteristics | | 8 | 8 | 8 | 8 | A |
| | Color tone L* (SCE) (non-LM portion of transmitting resin member) | | 21.8 | 26.2 | 20.8 | 21.8 | 22.8 |
| | Color tone L* (SCE) (LM portion of transmitting resin member) | | 29.4 | 26.9 | 25.9 | 27.7 | 33.0 |
| | Color tone difference ΔE (SCE) (LM portion and non-LM portion of transmitting resin member) | | 7.8 | 1.7 | 5.2 | 6.2 | 11.8 |
| | 1.5mmt transmittance (side opposite to gate) | % | 43 | 28 | 71 | 66 | 0 |
| | PCT100h treatment tensile strength retention rate | % | - | 82 | 64 | 68 | 42 |
| Welding characteristics | Welding strength 150W-900mm/s 5 laps | N | - | × | 1680 | 1497 | × |
| | Welding strength 150W-900mm/s 20 laps | N | - | 1861 | 1390 | 794 | × |
| Color tone difference between members | Color tone difference ΔE (SCE) (non-LM portion of transmitting resin member and absorbing resin member) | | 2.0 | 3.9 | 1.9 | 2.2 | - |
| | Color tone difference ΔE (SCE) (LM portion of transmitting resin member and absorbing resin member) | | 6.7 | 5.1 | 3.3 | 5.0 | - |

[Table 5]

| | | | Composition |
|---|---|---|---|
| Formulation of absorbing resin member | Thermoplastic polyester resin | PBT | 100 |
| | Glass fibers | GF | 43.95 |
| | Epoxy compound | EP | 1.46 |
| | Phenol-based stabilizer | | 0.29 |
| | Release agent | | 0.44 |
| | Carbon black masterbatch | | 2.86 |

In the Table 3 and Table 4, LM portion means the portion subjected to laser marking, and non-LM portion means the portion not subjected to laser marking.

In Table 4, "×" means failure in laser-welding.

As is clear from the results, the molded articles (transmitting resin members) formed from the resin compositions of the present invention were capable of being laser-marked and capable of being laser-welded (Examples 1 to 6). Further, it was found that the color differences between the transmitting resin members and their laser-marked portions were large, and that laser marking was thus effectively achieved. In addition, the transmitting resin members formed from the resin compositions of the present invention had high transmittance for light having a wavelength of 1060 nm and were thus excellent in laser transmission properties. Further, the transmitting resin members retained high strength even after the pressure cooker test. In addition, the molded articles (transmitting resin members) formed from the resin compositions of this embodiment also had small color differences with the absorbing resin member and were excellent in designability. Further, the color differences between the laser-marked portions of the transmitting resin members and the absorbing resin member were large.

In contrast to this, when no butadiene rubber-containing polystyrene was included (Comparative Examples 1 to 3), the laser marking properties were poor. Furthermore, when butadiene rubber-containing polystyrene was included with carbon black also included as in conventional resin compositions for laser marking (Comparative Example 4), the laser was not transmitted, and it was impossible to use the light-transmissive resin composition for a laser-transmitting resin member in the laser welding.

[Reference Signs List]

21, 22 hole
23, 24 measurement jig
25, 26 measurement jig

Claims

1. A resin composition comprising 100 parts by mass of a thermoplastic polyester resin, 5 to 100 parts by mass of butadiene rubber-containing polystyrene, and 0.01 to 5 parts by mass of an infrared-transmitting colorant, the resin composition being for use as a laser-transmitting resin member in laser welding and capable of being laser-marked.

2. The resin composition according to claim 1, wherein the thermoplastic polyester resin comprises a polybutylene terephthalate resin.

3. The resin composition according to claim 1 or 2, further comprising 1 to 100 parts by mass of a polycarbonate resin per 100 parts by mass of the thermoplastic polyester resin.

4. The resin composition according to claim 3, wherein the polycarbonate resin is contained in an amount of 1 to 500 parts by mass per 100 parts by mass of the butadiene rubber-containing polystyrene.

5. The resin composition according to any one of claims 1 to 4, wherein the butadiene rubber-containing polystyrene is high impact polystyrene (HIPS).

6. The resin composition according to any one of claims 1 to 5, further comprising an epoxy compound.

7. The resin composition according to any one of claims 1 to 6, further comprising an inorganic filler.

8. The resin composition according to any one of claims 1 to 7, further comprising a phosphorus-based stabilizer.

9. The resin composition according to any one of claims 1 to 8, wherein the infrared-transmitting colorant is an infrared-transmitting dye.

10. The resin composition according to any one of claims 1 to 9, wherein the infrared-transmitting colorant comprises a black dye and/or a black dye composition comprising two or more chromatic dyes.

11. The resin composition according to claim 10, wherein the resin composition is capable of being laser-marked with a color having higher lightness than that of the black dye and/or black dye composition.

12. The resin composition according to any one of claims 1 to 11, wherein a content of nickel in the infrared-transmitting colorant is 0.8% by mass or less.

13. The resin composition according to any one of claims 1 to 12, wherein a content of a pigment other than the infrared-transmitting colorant in the resin composition is 1% by mass or less based on a content of the infrared-transmitting colorant.

14. The resin composition according to any one of claims 1 to 13, wherein a content of nigrosine in the resin composition is 1% by mass or less based on the content of the infrared-transmitting colorant.

15. The resin composition according to any one of claims 1 to 14, wherein when the resin composition is molded into a 1.5 mm thick test piece, the test piece has a light transmittance at a wavelength of 1064 nm of 12% or more.

16. The resin composition according to any one of claims 1 to 15, wherein when the resin composition is molded to a thickness of 1.5 mm and partially subjected to laser marking, a color difference $\Delta E$ between a color tone of a laser-marked portion and a color tone of a non-laser-marked portion is 10.0 or more by an SCE method.

17. A molded article obtained by molding a composition comprising a thermoplastic polyester resin and an infrared-transmitting colorant,

the molded article having a light transmittance of 12% or more at a wavelength of 1064 nm, and
a color difference $\Delta E$ between a color tone of a laser-marked portion and a color tone of a non-laser-marked portion being 7.0 or
more by an SCE method, when the molded article is subjected to laser marking.

18. A molded article formed from the resin composition according to any one of claims 1 to 16.

19. The molded article according to claim 17 or 18, wherein the molded article is laser-marked.

20. Use of the resin composition according to any one of claims 1 to 16 for a resin member for use as a laser-transmitting resin member in laser welding and capable of being laser-marked.

21. A kit comprising:

the resin composition according to any one of claims 1 to 16; and
a light-absorptive resin composition comprising a thermoplastic resin and light-absorptive colorant.

22. The kit according to claim 21, wherein when the resin composition and the light-absorptive resin composition are each molded to a thickness of 1.5 mm, a difference therebetween in color tone L, $\Delta E$, is 6.0 or less by an SCE method.

23. A laser-welded article obtained by laser-welding together a laser-transmitting resin member formed from the resin composition according to any one of claims 1 to 16, and a laser-absorbing resin member formed from a light-absorptive resin composition comprising a thermoplastic resin and light-absorptive colorant.

24. The laser-welded article according to claim 23, wherein the laser-transmitting resin member is capable of being laser-marked.

25. The laser-welded article according to claim 23, wherein the laser-transmitting resin member is laser-marked.

26. A method for producing a laser-welded article, comprising:

irradiating a laser-transmitting resin member formed from the resin composition according to any one of claims 1 to 16 with a laser to laser-mark the laser-transmitting resin member, and
laser-welding together the laser-transmitting resin member and a laser-absorbing resin member formed from a light-absorptive resin composition comprising a thermoplastic resin and light-absorptive colorant.

27. The method for producing a laser-welded article according to claim 26, wherein the laser welding is performed by galvano-scanning laser welding.

[Figure 1]

(A)

(B)

[Figure 2]

(A)

(B)

[Figure 3]

(A)

(B)

[Figure 4]

| INTERNATIONAL SEARCH REPORT | International application No. |
|---|---|
| | **PCT/JP2021/038931** |

**A. CLASSIFICATION OF SUBJECT MATTER**

*C08L 51/04*(2006.01)i; *C08L 67/00*(2006.01)i; *C08L 67/02*(2006.01)i; *C08L 69/00*(2006.01)i; *C08L 63/00*(2006.01)i; *B29C 65/16*(2006.01)i
FI:  C08L67/00; C08L51/04; C08L67/02; C08L69/00; C08L63/00 Z; B29C65/16

According to International Patent Classification (IPC) or to both national classification and IPC

**B. FIELDS SEARCHED**

Minimum documentation searched (classification system followed by classification symbols)

C08L51/04; C08L67/00; C08L67/02; C08L69/00; C08L63/00; B29C65/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2017/146196 A1 (MITSUBISHI ENGINEERING-PLASTICS CORP) 31 August 2017 (2017-08-31)<br>entire text | 1-27 |
| A | JP 2020-050822 A (POLYPLASTICS CO) 02 April 2020 (2020-04-02)<br>entire text | 1-27 |
| A | JP 2017-081047 A (TOPPAN TDK LABEL CO LTD) 18 May 2017 (2017-05-18)<br>entire text | 1-27 |
| A | JP 2011-503338 A (SABIC INNOVATIVE PLASTICS IP B.V) 27 January 2011 (2011-01-27)<br>entire text | 1-27 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/038931**

| Patent document cited in search report | | | Publication date (day/month/year) | Patent family member(s) | | | Publication date (day/month/year) |
|---|---|---|---|---|---|---|---|
| WO | 2017/146196 | A1 | 31 August 2017 | US | 2019/0016883 | A1 | |
| | | | | entire text | | | |
| | | | | EP | 3421540 | A1 | |
| | | | | CN | 108699322 | A | |
| JP | 2020-050822 | A | 02 April 2020 | (Family: none) | | | |
| JP | 2017-081047 | A | 18 May 2017 | US | 2017/0124443 | A1 | |
| | | | | entire text | | | |
| JP | 2011-503338 | A | 27 January 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6183822 B
- JP 2020050822 A
- JP 4157300 B
- JP 4040460 B

- JP 2019059813 A
- JP 2019019305 A
- WO 2020013127 A